(19) Europäisches Patentamt
European Patent Office
Office européen des brevets

(11) **EP 1 798 023 B1**

(12) **EUROPEAN PATENT SPECIFICATION**

(45) Date of publication and mention
of the grant of the patent:
**29.07.2009 Bulletin 2009/31**

(51) Int Cl.:
***B29D 30/48*** (2006.01)   ***B21F 37/00*** (2006.01)

(21) Application number: **05783203.2**

(86) International application number:
**PCT/JP2005/016914**

(22) Date of filing: **14.09.2005**

(87) International publication number:
**WO 2006/030815 (23.03.2006 Gazette 2006/12)**

(54) **METHOD AND SYSTEM FOR PRODUCING ANNULAR COAXIAL STRANDED BEAD CORD**

VERFAHREN UND SYSTEM ZUR HERSTELLUNG EINES RINGFÖRMIGEN KOAXIALEN VERSEILTEN WULST-KORDS

METHODE ET SYSTEME DE FABRICATION DE CORDON TORONNE COAXIAL ANNULAIRE

(84) Designated Contracting States:
**DE FR GB IT**

(30) Priority: **16.09.2004  JP 2004270243**
**27.01.2005  JP 2005020201**

(43) Date of publication of application:
**20.06.2007  Bulletin 2007/25**

(73) Proprietors:
• **Sumitomo (SEI) Steel Wire Corp.**
**Itama-shi, Hyogo 664-0016 (JP)**
• **Sumitomo Electric**
**Tochigi Co. Ltd.**
**Utsunomiya-shi**
**Tochigi 3213231 (JP)**

(72) Inventors:
• **SASABE, Hiroshi,**
**Sumitomo Electric Tochigi Co. Ltd**
**Utsunomiya-shi,Tochigi 321-3231 (JP)**

• **WAKAHARA, Hitoshi**
**Sumitomo Electric Tochigi CoLtd**
**Utsunomiya-shi,Tochigi 321-3231 (JP)**
• **OKAMOTO, Kenichi**
**Itami-shi, Hyogo 664-0016 (JP)**

(74) Representative: **Cross, Rupert Edward Blount**
**Boult Wade Tennant**
**Verulam Gardens**
**70 Gray's Inn Road**
**London WC1X 8BT (GB)**

(56) References cited:
**WO-A1-20/04018187        JP-A- 2001 047 169**
**JP-A- 2004 098 640        JP-B1- 3 657 599**
**JP-B2- 3 499 261**

**Description**

TECHNICAL FIELD

This invention relates to a method and apparatus for forming a bead cord to be embedded in a bead of a pneumatic tire, and particularly an annular concentric-lay bead cord comprising an annular core and a sheath layer or layers formed by wrapping a wrapping wire around the annular core.

BACKGROUND OF THE INVENTION

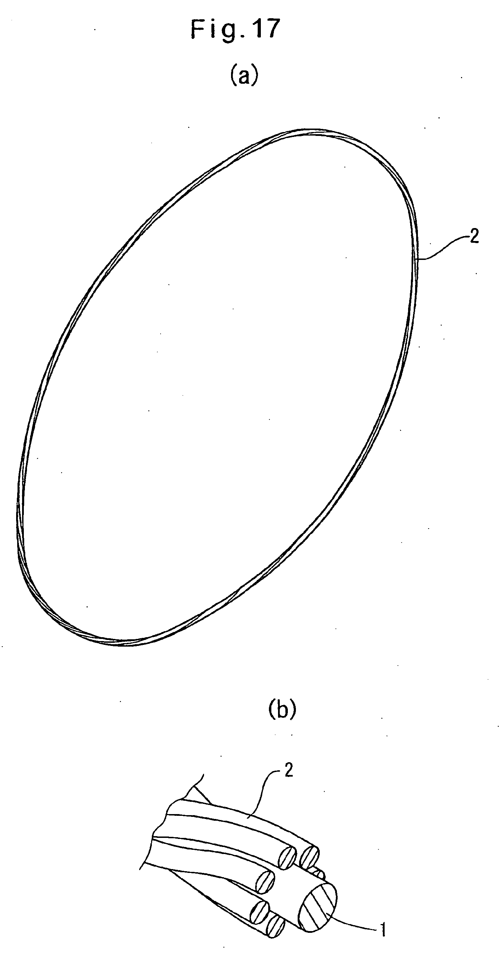

Annular concentric-lay bead cords are used in a variety of vehicle tires. A typical concentric-lay bead cord is shown in Figs. 17(a) and 17(b). As shown, it comprises an annular core 1 and a sheath layer formed by wrapping a wrapping wire 2 around the annular core 1 by repeatedly passing the wrapping wire through the plane of the annular core at positions inside and outside of the circle defined by the annular core.

The following methods for forming such annular concentric-lay bead cords are known. In the method disclosed in Patent document 1, a bead cord is formed using a wrapping wire which has a tendency to curl into a circle having a diameter more than twice as large as the diameter of the annular core. The bead cord thus formed is sufficiently stiff, thus improving the grip, turning ability and response of the tire which uses such bead cords.

In the method disclosed in Patent document 2, as shown in Fig. 18, with the leading end of the wrapping wire temporarily fastened to the annular core 1 with a chuck, the annular core 1 is rotated in the circumferential direction while simultaneously rotating a reel 3 around the annular core 1 to helically wrap the wrapping wire around the annular core. Before the rotating reel 1 interferes with the chuck, the chuck is removed. Then the reel is continuously rotated. In this method, it is possible to wrap the wrapping wire alternately in the S and Z directions in a plurality of layers. It is thus possible to prevent tangling and twisting of the wrapping wire 2, thereby greatly improving the productivity and quality of the bead cord.

In the method of forming a bead cord disclosed in Patent publication 3, with the leading end of the wrapping wire not fixed to but tangled with the annular core, or temporarily fastened to the annular core so that the wrapping wire can rotate freely, by moving the reel on which the wrapping wire is wound to a diameter smaller than the diameter of the annular core by bending along its plane, and simultaneously moving the annular core vertically and rotating it, too, the wrapping wire gets tangled around the annular core due to the bending stress of the steel wire, while eliminating twisting stress.

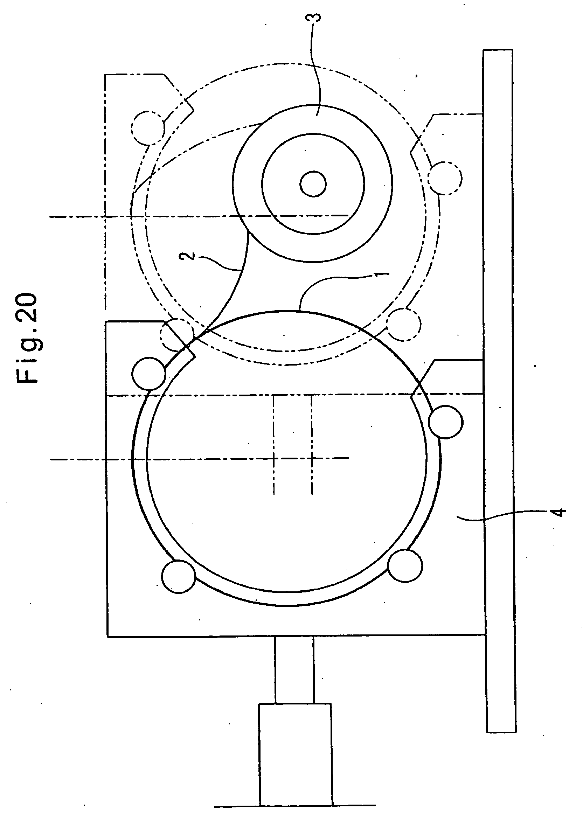

In the method disclosed in Patent publication 4, as shown in Fig. 20, with the reel 3 on which the wrapping wire is wound fixed in a predetermined position, a driving unit 4 for circumferentially rotating the annular core 1 is reciprocated in a straight line between a position where the reel 3 is outside of the circle defined by the annular core 1 (position shown by the solid line in Fig. 20) and a position where the reel 3 is inside of the circle defined by the annular core 1 (position shown by the phantom line in Fig. 20), and while the reel 3 is inside and outside of the circle defined by the annular core 1, the reel 3 is transferred so as to move across the plane of the annular core, thereby wrapping the wrapping wire unwound from the reel 3 around the annular core 1.

Patent document 1: JP patent publication 3499261
Patent document 2: JP patent publication 2001-47169
Patent document 3: JP patent publication 2004-98640
Patent document 4: WO2004/018187 A1 (Fig. 13)

DISCLOSURE OF THE INVENTION

PROBLEMS TO WHICH THE INVENTION SEEKS A SOLUTION

Shape stability is the most important quality characteristic required for bead cords. In this regard, bead cords formed by any of the methods disclosed in the above-identified patent documents have the following problems.
In the method disclosed in Patent publication 1, in order to increase the stiffness of the tire in which are used bead cords formed by this method, a wrapping wire having a tendency to curl into a circle having a diameter more than twice the diameter of the annular core is wrapped around the annular core. It is difficult to automatically wrap such a wrapping wire around the annular core. The cost is thus high. Since the wrapping wire has a tendency to curl into a circle having a large diameter, it is troublesome to manually wrap such a wire. Also, since the wrapping wire has a tendency to curl into a circle, it offers a large resistance when pulled out, which increases the possibility of trouble when the wrapping wire is wrapped around the annular core. Further, while the wrapping wire is being wrapped around the annular core after winding it on a reel, it is necessary to keep a predetermined tension applied to the wrapping wire in order to prevent loosening of the wrapping wire. But too much tension will cause the annular core to strain and make it difficult to wrap the wrapping wire.

In the method disclosed in Patent document 2, because the wrapping wire is temporarily fastened to the annular core with a chuck, and the reel is rotated around the annular core while circumferentially rotating the annular core, the wrapping angle of the wrapping wire tends to markedly fluctuate. Also, both the annular core and the wrapping wire are moved in a wasteful manner, and the apparatus itself tends to be large and heavy.

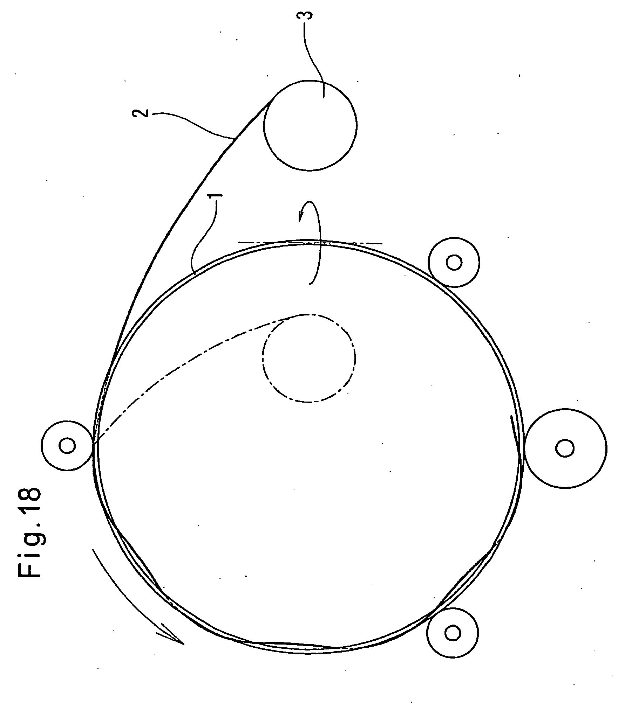

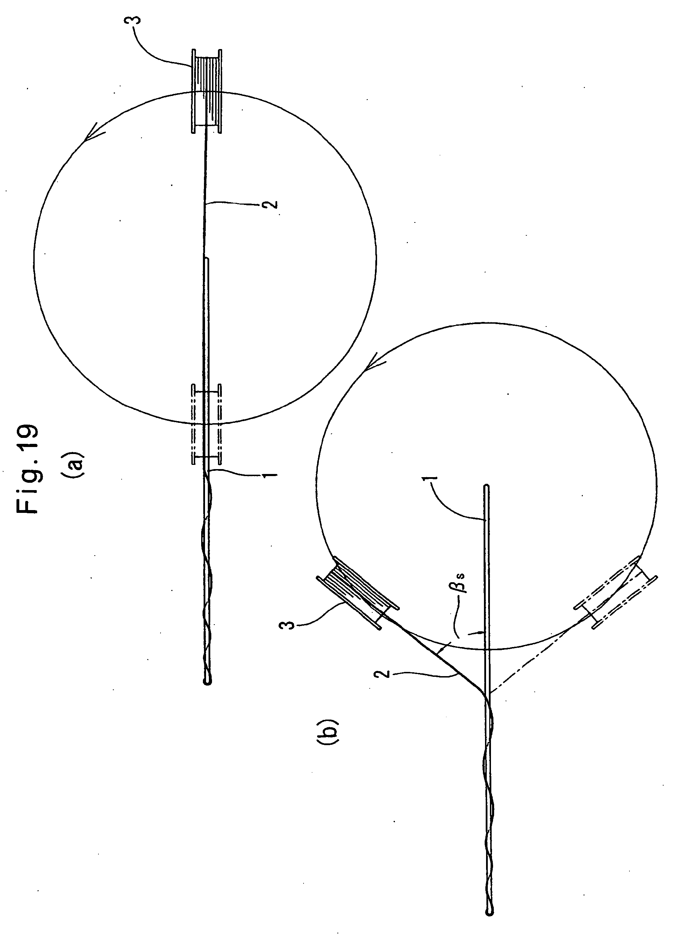

Also, in the method disclosed in Patent document 2, since the reel 3 is rotated around the annular core 1 as shown in Fig. 18, the angle $\beta_S$ between the wrapping wire 2 and the plane of the annular core 1 while the wrapping wire is being wrapped around the annular core changes from zero degrees (Fig. 19(a)) to about 50 degrees (Fig. 19(b)). Typically, bead cords used in commercially available tires have a twist angle $\beta$ of 3.5 to 5.5 degrees in the case of a 1+m twist construction for motorcycle tires and about 7 degrees in the case of a 1+m+n twist construction for passenger cars and minitrucks. Thus, in the case of the method of Patent publication 2, since the angle $\beta_S$ is very large compared to the twist angle $\beta$, the wrapping wire 2 tends to be arranged around the annular core less uniformly. Formability of the cord is thus inferior.

In the method disclosed in Patent document 2, in which the reel 3 is rotated around the annular core 1, since the reel 3 moves along a circular path, its travel distance is long and thus a long time is needed to wrap the wrapping wire around the annular core. Since uniform tension is applied to the wrapping wire 2 while the wrapping wire is being wrapped around the annular core, the annular core tends to be pulled in circumferential directions. Thus, the wrapping wire cannot be efficiently and smoothly wrapped around the annular core.

In the method disclosed in Patent document 3, the annular core, which is positioned horizontally, makes a complicated movement, so that the angle $\beta_S$ tends to fluctuate violently as in the case of the method of Patent document 2. Thus, the wrapping wire cannot be stably wrapped around the annular core. Between horizontal motions of the reel, a time interval is needed, so that it takes twice as long a time to wrap the wrapping wire around the annular core. In order to improve wrapping properties, it is necessary to limit the movement of the annular core to a minimum when wrapping the wrapping wire around the annular core. In particular, since the annular core is placed in the direction of gravity and is moved vertically in the direction of gravity, and further, the reel on which the wrapping wire is wound is moved discontinuously, wrapping properties are inferior.

In the method disclosed in Patent document 4, as shown in Fig. 20, with the reel 3 fixed, the driving unit 4 itself is linearly reciprocated between a position where the reel 3 is inside of the circle defined by the annular core 1 and a position outside of the circle so that the annular core 1 moves toward and away from the reel 3. While the annular core 1 is moving toward the reel 3, the wrapping wire 2 is pushed in such a direction as to loosen. Conversely, while the annular core 1 is moving away from the reel 3, the wrapping wire 2 is pulled. Thus, as the annular core 1 moves, the wrapping starting point at which the wrapping wire begins to be wrapped around the annular core 1 moves markedly, thus making it difficult to wrap the wrapping wire around the annular core so as to be arranged uniformly and evenly.

An object of the present invention is to provide a method and apparatus for forming an annular concentric-lay bead cord which can wrap the wrapping wire quickly, efficiently and evenly around the annular core.

SUMMARY OF THE INVENTION

The present invention provides a method of forming an annular concentric-lay bead cord,
wherein, with an annular core circumferentially rotated, a reel on which is wound a wrapping wire is repeatedly reciprocated across the plane of said annular core while said reel is inside and outside of a circle defined by said annular core so that the angle $\beta_S$ formed between the wrapping wire and the plane of said annular core will not exceed 29 degrees, thereby unwinding said wrapping wire from said reel and continuously and helically wrapping the thus unwound wrapping wire around said annular core to form a sheath layer or layers,
wherein said reel is moved toward a wrapping start point at which the wrapping wire begins to be wrapped around the annular core parallel to the plane of said annular core, moved perpendicular to said plane, moved away from said wrapping start point parallel to said plane, and moved perpendicular to said plane, and
wherein while said reel is moving toward said wrapping start point, said reel is rotated in a direction opposite to a direction in which said wrapping wire is unwound from said reel as said reel approaches said annular core.

The present invention further provides an apparatus for forming an annular concentric-lay bead cord, comprising:

a driving unit for circumferentially rotating an annular core,
a stationary supply unit for supplying a wrapping wire wound on a reel to a wrapping station for wrapping the wrapping wire around the annular core,
a swing unit for swinging the annular core about a wrapping start point of said wrapping station along the plane of the annular core, and

reel transfer mechanisms opposed to each other on both sides of the plane of the annular core, while kept spaced apart from said annular core,

said supply unit including said reel, said swing unit swinging the annular core about said wrapping start point between a first position where said reel is inside of a circle defined by said annular core and a second position where said reel is outside of said circle.

The present invention further provides a method of forming an annular concentric-lay bead cord, wherein, with an annular core circumferentially rotated, a reel on which is wound a wrapping wire is repeatedly reciprocated across the plane of said annular core while said reel is inside and outside of a circle defined by said annular core so that the angle $\beta_S$ formed between the wrapping wire and the plane of said annular core will not exceed 29 degrees, thereby unwinding said wrapping wire from said reel and continuously and helically wrapping the thus unwound wrapping wire around said annular core to form a sheath layer or layers,

wherein said annular core is repeatedly swung about a wrapping start point at which the wrapping wire begins to be wrapped around the annular core, between from a first position outside of a circle defined by the annular core and on one side of the plane of the annular core to a second position inside of said circle, moving said reel across the plane of the annular core to a third position on the other side of the plane of the annular core, moving said reel to a fourth position outside of the circle defined by the annular core, and moving said reel across the plane of the annular core to the first position,

and wherein said reel is reciprocated across the plane of said annular core while said reel is inside and outside of the circle defined by said annular core, thereby unwinding said wrapping wire from said reel and helically wrapping the thus unwound wrapping wire around said annular core.

The present invention further provides an apparatus for forming an annular concentric-lay bead cord, comprising:

a driving unit for circumferentially rotating an annular core,

a supply unit for supplying a wrapping wire wound on a reel to a wrapping station for wrapping the wrapping wire around the annular core, said supply unit including said reel, a slide unit for moving said reel, parallel to the plane of the annular core, from a first position outside of a circle defined by the annular core and on one side of the plane of the annular core to a second position inside of said circle, moving said reel across and perpendicular to the plane of the annular core to a third position on the other side of the plane of the annular core, moving said reel parallel to the plane of the annular core to a fourth position outside of the circle defined by the annular core, and moving said reel across and perpendicular to the plane of the annular core to the first position, and

a mechanism for preventing loosening of the wrapping wire, said mechanism comprising a rack provided at such a position that an upper portion of said reel moves along said rack when said reel moves toward a wrapping start point of the annular core, and a pinion provided on the back of said reel so as to mesh with said reel, thereby rotating said reel in a direction opposite to a direction in which the wrapping wire is unwound from said reel as the reel approaches the annular core.

MEANS TO SOLVE THE PROBLEMS

According to the present invention, there is provided a method of forming an annular concentric-lay bead cord wherein with an annular core circumferentially rotated, a reel on which is wound a wrapping wire is repeatedly reciprocated across a plane of the annular core while the reel is inside and outside of a circle defined by the annular core, thereby unwinding the wrapping wire from the reel and continuously and helically wrapping the thus unwound wrapping wire around the annular core to form a sheath layer or layers, **characterized in that** the reel is reciprocated across the plane of the annular core so that the angle $\beta_S$ formed between the wrapping wire and the plane of the annular core will not exceed 29 degrees.

Since the reel is moved across the plane of the annular core so that the above-defined angle $\beta_S$ will not exceed 29 degrees, the wrapping wire can be wrapped around the annular core efficiently and evenly.

The present invention provides two arrangements for limiting the angle $\beta_S$ to 29 degrees or less.

The first arrangement is the swing type arrangement in which the annular core is swung like a pendulum about the wrapping start point at which the wrapping wire begins to be wrapped around the annular core between a first position where the reel is inside of the circle defined by the annular core and a second position in which the reel is outside of the circle defined by the annular core. By moving the reel across the plane of the annular core at the first and second positions, it is possible to minimize the distance by which the reel is moved across the plane of the annular core, thus minimizing the above-defined angle $\beta_S$ when helically wrapping the wrapping wire around the annular core.

By swinging the annular core about the wrapping start point, the distance between the reel and the wrapping start point is kept substantially constant. Thus, it is possible to apply constant tension to the wrapping wire while wrapping the wrapping wire around the annular core, while preventing the wrapping wire from loosening. The wrapping wire can thus be uniformly wrapped around the annular core.

In the second arrangement, the reel is moved in the pattern of an elongated box of which the central axis is on the plane of the annular core. Specifically, the reel is moved toward the wrapping start point parallel to the plane of the annular core, moved perpendicular to the plane, moved away from the wrapping start point parallel to the plane, and moved perpendicular to the plane. With this arrangement, it is possible to minimize the maximum distance of the reel from the plane of the annular core, thereby minimizing the above-defined angle $\beta_S$.

In this arrangement, a rack is provided at such a position that an upper portion of the reel moves along the rack when the rack moves toward a wrapping start point of the annular core, and a pinion is provided on the back of the reel so as to mesh with the reel, thereby rotating the reel in a direction opposite to a direction in which the wrapping wire is unwound from the reel as the reel approaches the annular core. With this arrangement, when the reel approaches the annular core, the wrapping wire will not loosen, so that the wrapping wire can be wrapped around the annular core without meandering. Formability of the cord thus improves. In this arrangement, in which the reel is moved in a box-like pattern, the reel is rotated in the reverse direction when the reel approaches the wrapping start point to prevent loosening of the wrapping wire. This eliminates the need to wind the wrapping wire on the reel to a coil diameter smaller than the diameter of the reel beforehand to generate strong spring-back in the reel. That is, even if the initial coil diameter of the wrapping wire is large, the wrapping wire will not tangle in the reel, so that it is possible to reduce the downtime of the apparatus by increasing the amount of the wrapping wire wound on the reel. Also, by increasing the upper limit of the initial coil diameter of the wrapping wire wound on the reel, it is possible to increase the resistance to in-plane deformation of the bead cord.

In both of the abovementioned two types, the leading end of the wrapping wire unwound from the reel is preferably temporarily fastened to the annular coil before the wrapping wire is helically wrapped around the annular core by means of an unvulcanized or semi-vulcanized rubber sheet. Since unvulcanized rubber is identical in material to the rubber of the tire, it is not necessary to remove it in a later step.

In order to prevent bulging of the wrapping wire and to effectively disperse rigidity of the wrapping wire when helically wrapped around the annular core, the coil diameter of the wrapping wire wound on the reel is adjusted to satisfy the following formula:

$$0.90D_R \leqq D_{SO} \leqq 3.3D_R$$

or

$$0.55D_C \leqq D_{SO} \leqq 2.0D_C$$

where $D_R$ is the outer diameter of the reel, $D_{SO}$ is the initial coil diameter of the wrapping wire wound on the reel, and $D_C$ is the diameter of the circle defined by the annular core.

In order to allow the wrapping wire to slightly loosen when helically wrapped around the annular core, thereby preventing bulging of the wrapping wire, the reel is preferably rotatably received in a cassette including a cylindrical outer wall having a diameter slightly larger than the outer diameter of the reel and a width corresponding to the inner width of the reel, and formed with a hole through which the wrapping wire is pulled out of the cassette.

The swing type cord forming apparatus for forming an annular concentric-lay bead cord according to the present invention comprises a driving unit for circumferentially rotating an annular core, a stationary supply unit for supplying a wrapping wire wound on a reel to a wrapping station for wrapping the wrapping wire around the annular core, a swing unit for swinging the annular core about a wrapping start point of the wrapping station along the plane of the annular core, and reel transfer mechanisms opposed to each other on both sides of the plane of the annular core, while kept spaced apart from the annular core, the supply unit including the reel, the swing unit swinging the annular core about the wrapping start point between a first position where the reel is inside of a circle defined by the annular core and a second position where the reel is outside of the circle, the reel being moved across the plane of the annular core at the fixed position.

The driving unit comprises two pinch rollers for stably rotating the annular core without slipping, and a clamp unit provided nearer to the supply unit for positioning the wrapping start point while retaining the entire circumference of the wrapping start point and preventing lateral runout.

The apparatus for forming an annular concentric-lay bead cord by moving the reel in a box-like pattern comprises a driving unit for circumferentially rotating an annular core, a supply unit for supplying a wrapping wire wound on a reel to a wrapping station for wrapping the wrapping wire around the annular core, the supply unit including the reel, a slide unit for moving the reel, parallel to a plane of the annular core, from a first position outside of a circle defined by the annular core and on one side of the plane of the annular core to a second position inside of the circle, moving the reel across and perpendicular to the plane of the annular core by a short distance barely enough to move past the plane of the annular core to a third position on the other side of the plane of the annular core (the wrapping wire has been wrapped around the annular core by a half turn up to this point), moving the reel parallel to the plane of the annular core to a fourth position outside of the circle defined by the annular core, and moving the reel across and perpendicular to the plane of the annular core to the first position (the wrapping wire has been wrapped around the annular core by a full turn up to this point), and a mechanism for preventing loosening of the wrapping wire, the mechanism comprising a rack provided at such a position that an upper portion of the reel moves along the rack when the reel moves toward a wrapping start point of the annular core, and a pinion provided on the back of the reel so as to mesh with the reel, thereby rotating the reel in a direction opposite to a direction in which the wrapping wire is unwound from the reel as the reel approaches the annular core, thereby preventing loosening of the wrapping wire.

In this arrangement, in which the reel is moved in a box-like pattern, when the reel moves toward the wrapping start point of the wrapping wire around the annular core, the reel is turned in the reverse direction to prevent loosening of the wrapping wire.

ADVANTAGE OF THE INVENTION

As described above, according to the present invention, it is possible to wrap the wrapping wire around the annular core quickly, smoothly and efficiently and easily form an annular concentric-lay bead cord of which the wrapping wire is wrapped around the annular core with sufficient uniformity.

BRIEF DESCRIPTION OF THE DRAWINGS

Fig. 1 is a perspective view of a swing type cord forming apparatus according to the present invention for forming an annular concentric-lay bead cord.

Fig. 2 is a front view of the apparatus of Fig. 1, showing in solid line the state in which the reel is outside of the circle defined by the annular core at one end of swinging motion of the annular core, and showing in phantom line the state in which the reel is inside of the circle defined by the annular core at the other end of swinging motion of the annular core.

Fig. 3 is a front view of the apparatus of Fig. 1, showing, conversely to Fig. 2, the state in which the reel is inside of the circle defined by the annular core at one end of swinging motion of the annular core in solid line, and showing in phantom line the state in which the reel is outside of the circle defined by the annular core at the other end of swinging motion of the annular core.

Fig. 4 is a plan view of the apparatus of Fig. 1, showing the state in which the annular core is in the position shown by the solid line in Fig. 2.

Fig. 5 is a side view of the apparatus of Fig. 1, showing the state in which the annular core is in the position shown by the solid line in Fig. 2.

Fig. 6 is a vertical sectional side view of reel transfer mechanisms provided on both sides of the plane of the annular core so as to be spaced apart from each other by a sufficient distance not to interfere with the swinging motion of the annular core.

Figs. 7(a), 7(b) and 7(c) are side views of different clamp units of the driving unit in the swing type cord forming apparatus.

Figs. 8(a) to 8(d) are schematic plan views of the reel of the swing type cord forming apparatus according to the present invention, showing how the reel moves when forming an annular concentric-lay bead cord.

Fig. 9 is a front view of a cord forming apparatus according to the present invention of the type in which the reel is moved in a box-like pattern.

Fig. 10 is a partial front view of the apparatus of Fig. 9, showing a mechanism for preventing loosening of the wrapping wire which comprises a rack and a pinion.

Fig. 11 is a plan view of the apparatus of Fig. 9.

Fig. 12 is a side view of the apparatus of Fig. 9, showing reel transfer mechanisms.

Fig. 13 is a side view, partially in vertical section, of the apparatus of Fig. 9, showing the detailed structure of the reel transfer mechanisms.

Figs. 14(a), 14(b) and 14(c) are side views of different clamp units of the driving unit in the cord forming apparatus of the type in which the reel is moved in a box-like pattern.

Fig. 15 is a schematic front view of the reel of the cord forming apparatus according to the present invention of the

## EP 1 798 023 B1

type in which the reel is moved in a box-like pattern for forming an annular concentric-lay bead cord, showing how the reel is moved.

Figs. 16(a) to 16(d) are schematic plan views of the reel of the cord forming apparatus according to the present invention of the type in which the reel is moved in a box-like pattern, showing how the reel moves when forming an annular concentric-lay bead cord.

Fig. 17(a) shows an entire annular concentric-lay bead cord, and Fig. 17(b) is a perspective view of a portion of the annular concentric-lay bead cord.

Fig. 18 is a schematic front view of a reel, showing the movement of the bobbin when forming a conventional annular concentric-lay bead cord.

Figs. 19(a) and 19(b) are schematic plan views of the bobbin, showing the movement of the reel when forming a conventional annular concentric-lay bead cord.

Fig. 20 is a schematic view of another conventional cord forming apparatus for forming an annular concentric-lay bead cord.

DESCRIPTION OF NUMERALS

| | |
|---|---|
| 1 | annular core |
| 2 | wrapping wire |
| 3 | reel |
| 4 | driving unit |
| 10 | driving unit |
| 11 | retainer arm |
| 12a, | 12b pinch rollers |
| 13 | clamp unit |
| 13a, | 13b rollers |
| 14 | stand |
| 20 | supply unit |
| 21 | reel |
| 22 | cassette stand |
| 23 | cassette |
| 23a | wire feed hole |
| 24 | guide rod |
| 25 | air cylinder |
| 26 | rod |
| 27 | push plate |
| 30 | pivoting mechanism |
| 31 | rotary disc |
| 32 | crankshaft |
| 101 | annular core |
| 102 | wrapping wire |
| 104 | clamp unit |
| 110 | driving unit |
| 104a, 104b | rollers |
| 111a, | 111b pinch rollers |
| 120 | supply unit |
| 121 | reel |
| 122 | cassette |
| 122a | wire feed hole |
| 130 | slide unit |
| 131 | slide table |
| 132 | cassette stand |
| 133 | guide rod |
| 134 | crank mechanism |
| 135 | air cylinder |
| 136 | rail |
| 137 | driving motor |

7

| 138a | rod |
| 140 | rack |
| 141 | pinion |

BEST MODE FOR EMBODYING THE INVENTION

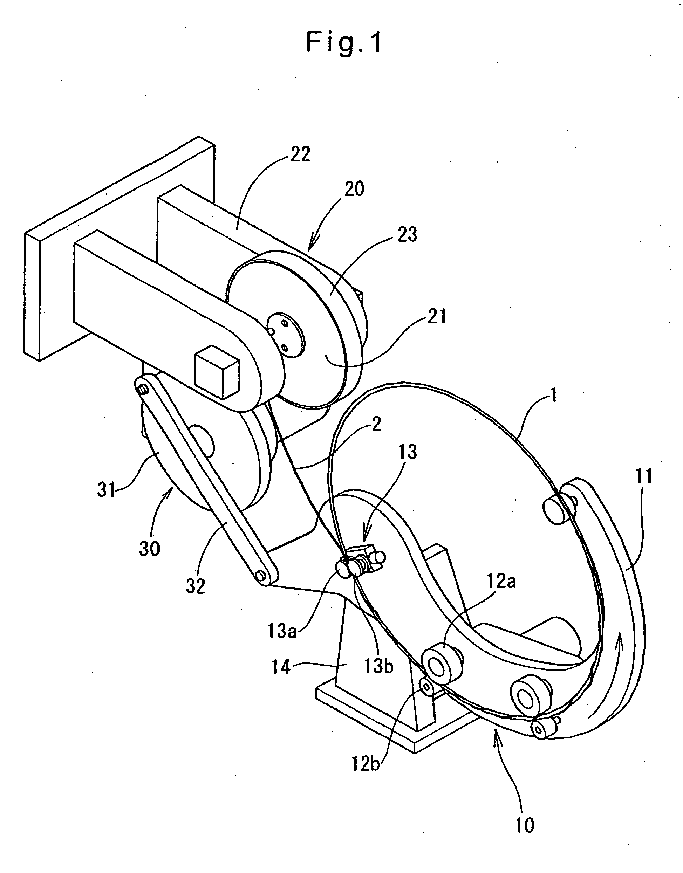

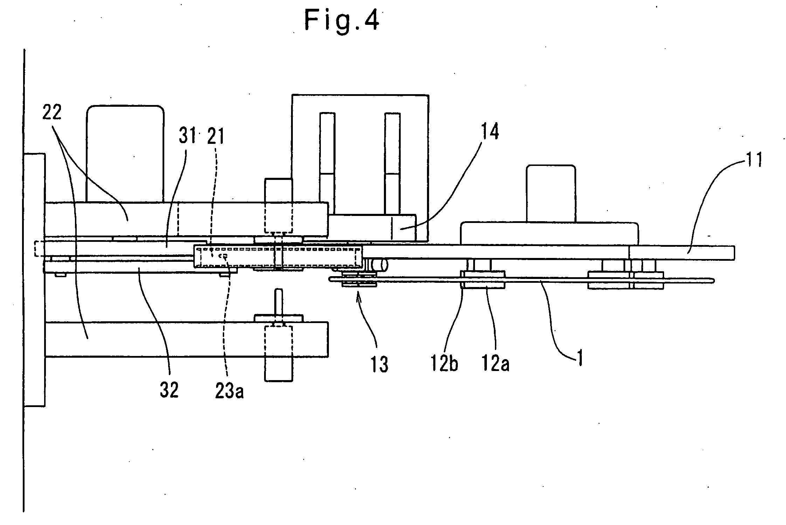

Figs. 1 to 8 show a swing type cord forming apparatus embodying the present invention.
The cord forming apparatus shown comprises a driving unit 10 for turning an annular core 1 in its circumferential direction, and a supply unit 20 for feeding an wrapping wire 2 wound on a reel 21 to the annular core 1.

The supply unit 20 for the wrapping wire 2 is stationary. The driving unit 10 includes a bow-shaped retainer arm 11, and two pinch rollers 12a and 12b mounted on the arm 11 and coupled to a driving motor, for rotating the annular core 1 in its circumferential direction.

The arm 11 further carries a clamp unit 13 located rearwardly of the pinch rollers 12a and 12b with respect to the rotational direction of the annular core 1 and surrounding the annular core 1. The wrapping wire 2 is fed to the clamp unit 13 before being wrapped around the annular core 1. The clamp unit 13 comprises two rollers 13a and 13b and checks lateral run-out of the annular core 1, thereby allowing the annular core 1 to stably rotate in its circumferential direction and also positioning the wrapping start point where the wrapping wire 2 is wrapped around the annular core 1. In the embodiment, to prevent lateral run-out of the annular core 1, the annular core 1 is positioned upright.

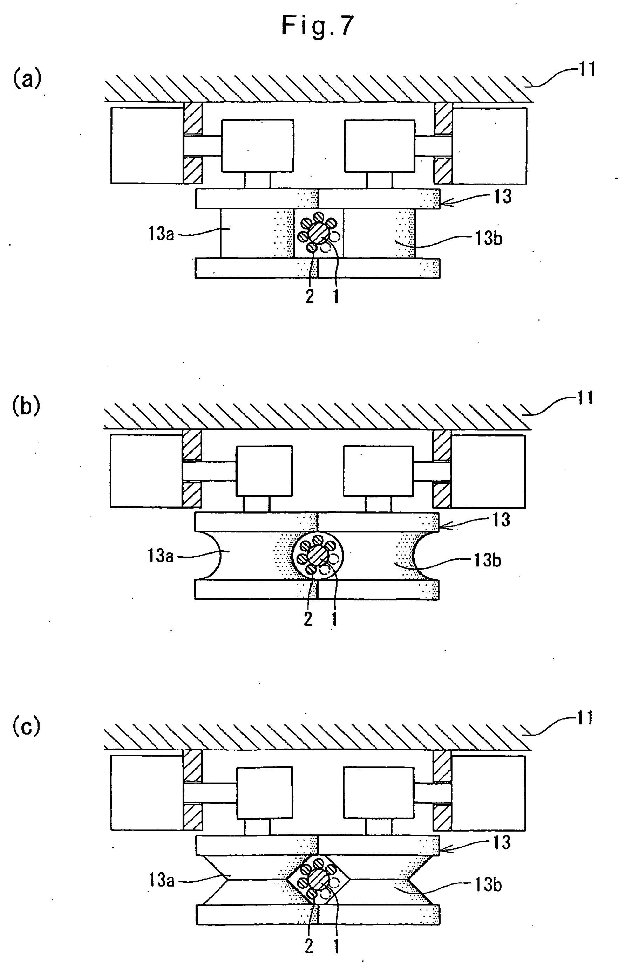

The clamp unit 13, which comprises the two rollers 13a and 13b, is only required to prevent lateral run-out of the annular core 1, to surround the annular core 1, thereby maintaining stable circumferential rotation of the core 1, even when the cord diameter has increased to the final diameter, and to fix the wrapping start point of the wrapping wire 2. Thus the sectional shape of the groove of each roller 13a, 13b is not particularly limited. For example, the grooves of the rollers 13a and 13b may have a U-shaped cross-section as shown in Fig. 7(a), an arcuate cross-section as shown in Fig. 7(b), or a V-shaped cross-section as shown in Fig. 7(c).

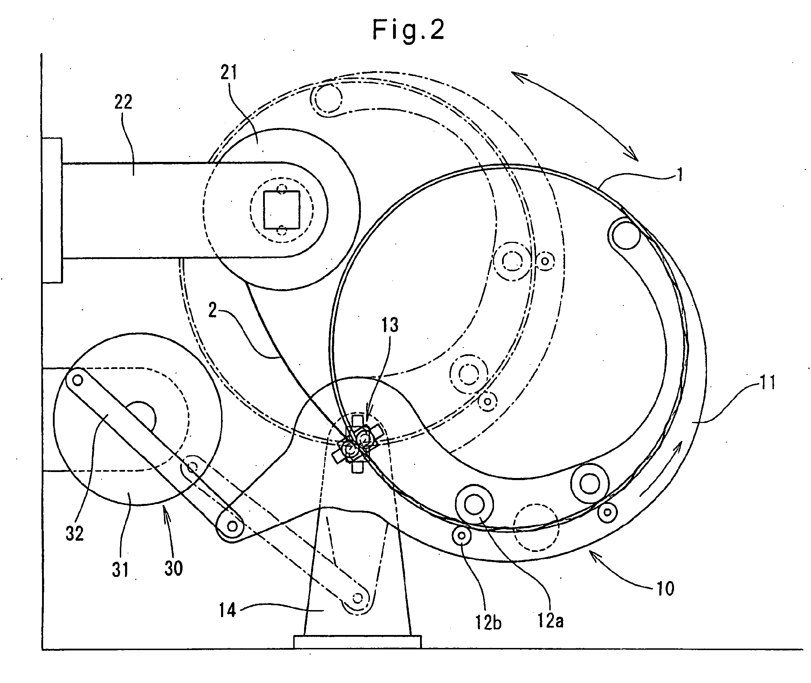

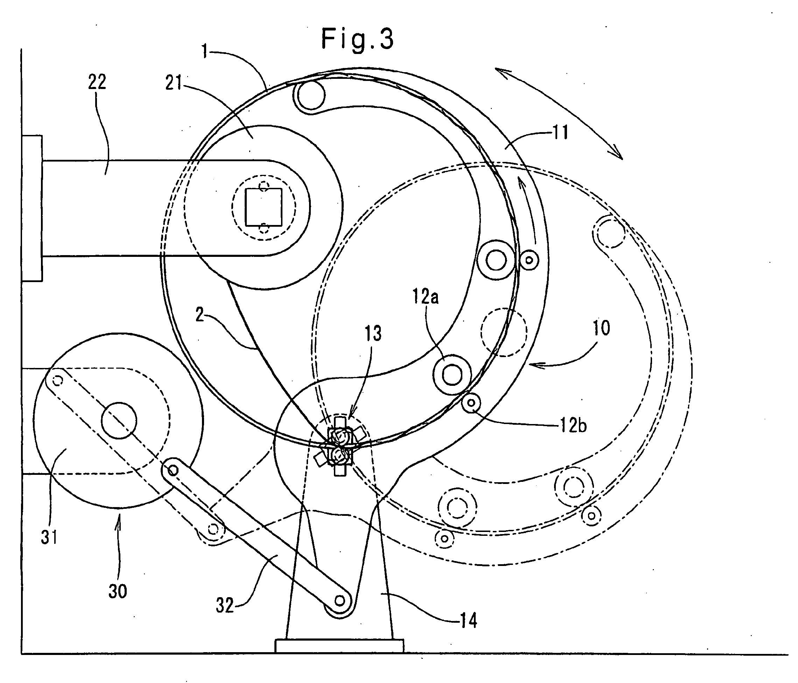

The arm 11 is pivotally mounted on a stand 14 so as to be pivoted like a pendulum about its point where there is the clamp unit 13 by a pivoting mechanism 30 comprising a rotary disc 31 and a crankshaft 32.
The annular core 1 is supported on the arm 11 such that at one extreme end of each cycle of the pendulum motion of the arm 1, the reel 21 is located outside of the circle defined by the core 1 as shown by the solid line in Fig. 2, and at the other extreme end of each cycle of the pendulum motion of the arm 1, the reel 21 is located inside of the circle defined by the core 1 as shown by the solid line in Fig. 3.

The supply unit 20 includes a pair of opposed front and rear horizontal cassette stands 22 that are sufficiently spaced apart from the annular core 1 so as not to interfere with the pendulum motion of the core 1.
The cassette stands 22 carry at their free ends a reel transfer mechanism.

The supply unit 20 further includes the reel 21, on which the wrapping wire 2 is wound, and a cassette 23 including a cylindrical outer wall having a diameter slightly greater than the outer diameter of the reel 21 and having a width at least equal to the inner width of the reel 21. The reel 21 is rotatably mounted in the cassette so as to cover the entire surface of the wrapping wire 2 wound thereon. The reel 21 and the cassette 23 form a cartridge. The cylindrical outer wall of the cassette is formed with a wire feed hole 23a through which the wrapping wire 2 is pulled out of the cassette and fed to the clamp unit 13 as the wrapping start point of the wrapping wire 2 around the annular core 1. The wrapping wire 2 is wound on the reel 21 to a predetermined coil diameter and set in the cassette 23 of the supply unit 20.

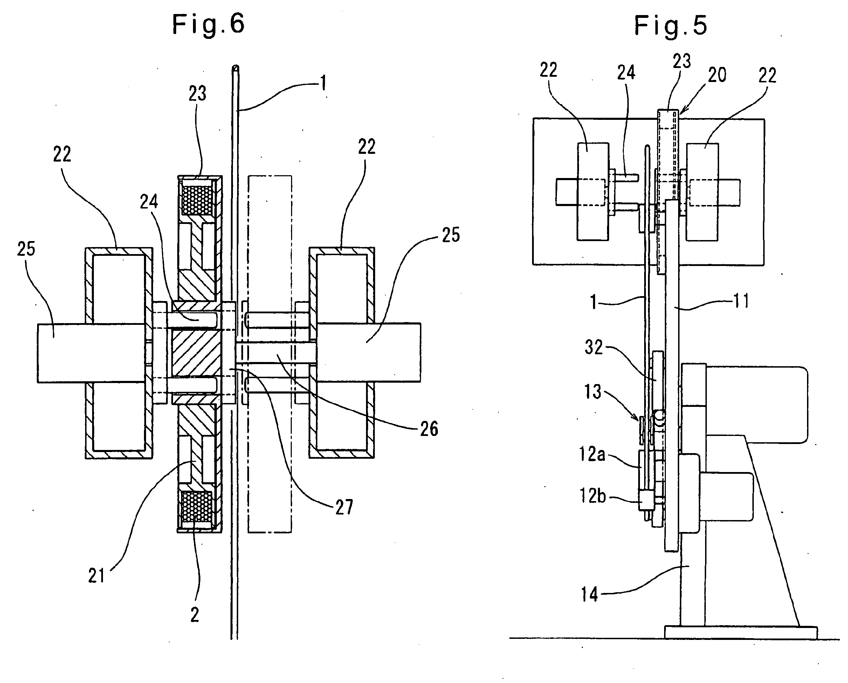

At the free ends of the pair of cassette stands 22, guide rods 24 are provided so as to oppose each other. The cassette 23 can be fitted on the guide rods 24 on either of the cassette stands 22, and can be transferred to the guide rods 24 on the other of the cassette stands 22 by means of the transfer mechanism. As shown in Figs. 5 and 6, the transfer mechanism comprises rods 26 adapted to be extended and retracted by air cylinders 25, and push plates 27 mounted on the free ends of the respective rods 26 for pushing the center of the cassette 23. By pushing the center of the cassette 23 with either of the push plates 27, the cassette 23 can be transferred between the guide rods 24 on one and the other sides.

Preferably, for high reliability, before starting wrapping, the leading end of the wrapping wire 2 is temporarily secured manually to the annular core 1 using e.g. unvulcanized rubber sheet or adhesive tape. Since an unvulcanized rubber sheet is of the same material as the material forming the tire, it is not necessary to remove such a rubber sheet later. With the leading end of the wrapping wire 2 temporarily secured to the annular core 1, the annular core 1 is rotated in the circumferential direction. At the same time, to wrap the wrapping wire 2 in the shape of the letter S, from the state in which the reel 21 of the wrapping wire 2 is on the right-hand side of the plane of the annular core 1, and the reel 21 is outside of the circle defined by the annular core 1 as shown by solid line in Fig. 2, the annular core 1 is swung about the clamp unit 13 until the reel 21 is inside of the circle defined by the annular core 1 as shown by the solid line in Fig. 3. In this state, the air cylinder 25 mounted on the cassette stand 22 on the right-hand side is activated to move the reel 21 perpendicular to the plane of the annular core 1 to transfer the cassette 23 to the guide rods 24 of the other cassette stand 25. The wrapping wire 2 is thus wrapped around the annular core 1 by a half turn. Then, from this state, in which the reel 21 is inside of the circle defined by the annular core 1 as shown by solid line in Fig. 3, the annular core 1 is swung about the clamp unit 13 until the reel 21 shown by solid line in Fig. 2 comes out of the circle defined by the core 1. With the reel 21 now outside of the circle defined by the core 1, the cassette 23 and thus the reel 21 are moved perpendicular to the plane of the annular core by activating the air cylinder 25 on the left-hand cassette stand 22. The wrapping wire 2 is thus wrapped around the annular core by one full turn.

Since the reel 21 is reciprocated across the plane of the annular core 1, and the annular core 1 swings about the clamp unit 13, which serves as the wrapping start point of the wrapping wire 2, the distance between the reel 21 and the wrapping start point of the wrapping wire 2 is kept substantially constant. Thus, the wrapping wire 2 can be wrapped around the annular core 1 under constant tension without loosening when unwound from the reel 21.

If the wrapping wire 2 loosens when unwound from the reel before being wrapped around the core 1, it is necessary to provide a space in the cassette 23 around the reel 21 to re-tension the wire 2. This space will reduce the amount of wrapping wire 2 that can be wound on the reel 21. But according to the present invention, since the wrapping wire 2 can be unwound from the reel 21 under constant tension with the least possibility of loosening, it is unnecessary to provide a space between the cassette 23 and the reel 21 to allow the reel to spring back, thereby re-tensioning the wire 2. Thus, compared to the situation in which such a space is provided, a greater amount of wrapping wire 2 can be wound in the cassette 23. According to the present invention, since a greater amount of wrapping wire 2 can be wound on the reel 21, it is possible to reduce the frequency of exchange of reels 21. This in turn reduces the downtime of the entire apparatus.

Also, since the distance between the reel 1 and the wrapping start point of the wrapping wire 2 around the annular core 1 is kept substantially constant, the wrapping wire 2 does not loosen when unwound from the reel 21. Thus, it is not necessary to adjust the coil diameter of the wrapping wire 2 in view of the spring-back of the reel. But it is necessary to adjust the initial coil diameter of the wrapping wire 2 so as to effectively disperse rigidity of the wrapping wire 2 when it is helically wrapped around the annular core 1 while the coil diameter of the wrapping wire 2 is still large. Specifically, the initial coil diameter of the wrapping wire 2 wound on the reel 21 preferably satisfies the following formula:

$$0.90D_R \leqq D_{SO} \leqq 3.3D_R$$

or

$$0.55D_C \leqq D_{SO} \leqq 2.0D_C$$

where $D_R$ is the outer diameter of the reel, Dso is the initial coil diameter of the wrapping wire wound on the reel, and Dc is the diameter of the circle defined by the annular core.

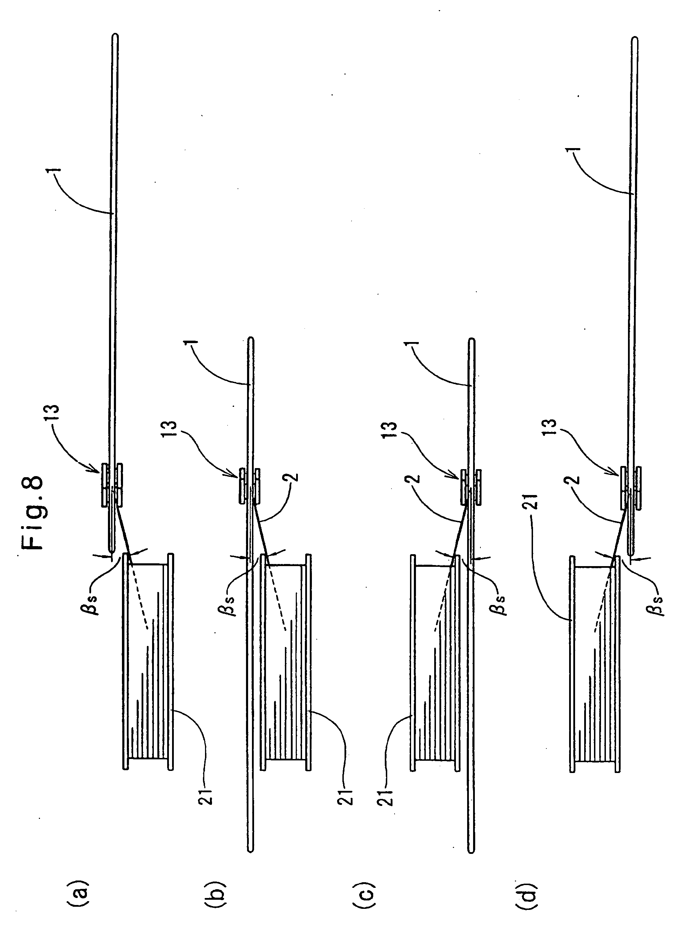

Figs. 8(a) to 8(d) show how the reel 21, on which the wrapping wire is wound, and the swinging annular core 1 move relative to each other.

In particular, from the position of Fig. 8(a), in which the reel 21 is outside of the circle defined by the annular core 1, the annular core 1 is swung to the position of Fig. 8(b), in which the reel 21 is inside of the circle defined by the annular core 1. Then, from the position of Fig. 8(b), the reel 21 is moved across the plane of the annular core 1 to the other side of the plane as shown in Fig. 8(c). With the reel 21 on the other side of the plane as shown in Fig. 8(c), the annular core 1 is swung until the reel is outside of the circle defined by the core 1 as shown in Fig. 8(d). The reel 21 is then moved across the plane of the annular core 1 back to its original position (position of Fig. 8(a)). This cycle is repeated. Thus, according to the present invention, by swinging the annular core 1 relative to the reel as shown in Figs. 8(a)→(b)→(c)→(d)→(a), while moving the reel 21 across the plane of the annular core 1 as shown in Figs. 8(b)→(c) and (d)→(a), the wrapping wire 2 can be wrapped around the annular core 1.

The travel distance of the reel 21 across the plane of the annular core 1 should be a minimum value above which the reel 1 can completely move across the plane from one side of the plane to the other side. More specifically, the angle $\beta_S$ of the wrapping wire 2 relative to the plane of the annular core 1 when wrapped around the core 1 should not exceed 29 degrees. If this value exceeds 29 degrees, the difference between this angle and the twist angle will grow so large that it will be difficult to wrap the wire 2 around the annular core 1 with uniform pitches.

In the embodiment, the wrapping wire 2 is wrapped around the annular core 1 in one layer in the S direction. But it can also be wrapped around the core in two or three layers. In order to wrap the wrapping wire 2 around the annular core 1 in two layers in the Z direction, it is only necessary to move the reel 21 across the plane of the annular core 1 in the reverse order, i.e. Figs. 8(d)→(c)→(b)→(a)→(d), adjust the horizontal position of the stand 14 and the vertical position of the clamp unit 13, and change the rollers with U-shaped grooves to new ones and adjust their vertical positions. The wrapping wire 2 can also be wrapped around the core 1 in three or four layers in the same manner when it is wrapped around the core in one or two layers.

Using this swing type cord forming apparatus, bead cord specimens were prepared by wrapping the wrapping wire around the annular core in one or two layers under different conditions. For each group of specimens, the degree of meandering and formability were determined. It was discovered that the angle $\beta_S$ between the wrapping wire and the plane of the annular core has the greatest influence on both of the above properties, and that the tension of the wrapping wire and the initial coil diameter of the wrapping wire have the second greatest influence on both of the abovementioned properties. The results of measurement of these properties are shown in Table 1.

As the prior art, bead cord specimens were prepared in the manner as shown in Fig. 20, in which an annular core 1 was reciprocated in a straight line so as to move toward and away from a fixed reel 3 carrying a wrapping wire 2. In this method, the wrapping wire loosens when the annular core 1 approaches the reel 3.

The degree of meandering and formability in Table 1 were determined as follows:

(1) Degree of meandering Each cord specimen was placed on a flat surface of e.g. a platen and the maximum gap present between the flat surface and each cord specimen was measured with a scale. Each group of specimens comprised 20 cord specimens.

The meaning of the symbols in Table 1 is as follows:

◎: Not less than 11 specimens of the group developed a maximum gap equal to or smaller than 0.5 mm, and none of the 20 specimens developed a maximum gap greater than 1.0 mm.
○: Less than 11 specimens developed a maximum gap equal to or smaller than 0.5 mm, and not less than 11 specimens developed a maximum gap equal to or smaller than 1.0 mm.
Δ: Less than 11 specimens developed a maximum gap equal to or smaller than 1.0 mm, and not less than 11 specimens developed a maximum gap equal to or smaller than 1.5 mm.
×: Less than 11 specimens developed a maximum gap equal to or smaller than 1.5 mm.

(2) Formability
How uniformly the wrapping wire was arranged around the annular core or around an intermediate layer of wrapping wire was visually checked. Each group of specimens comprised 20 cord specimens.
The meaning of the symbols in Table 1 is as follows:

◎: In all 20 specimens, the wrapping wire was sufficiently uniformly arranged around the core.
○: The number of specimens of which the wrapping wire was arranged with sufficient uniformity was not less than 18.
Δ: The number of specimens of which the wrapping wire was arranged with sufficient uniformity was not less than 10 and less than 18.
×: The number of specimens of which the wrapping wire was arranged with sufficient uniformity was less than 10.

(3) Index of the amount of the wrapping wire wrapped around the annular core Bead cord specimens were formed by a conventional method in which the wrapping wire was wrapped around the annular core while moving the annular core toward and away from the reel carrying the wrapping wire in a straight line so that the distance between the reel and the wrapping start point changes, and by the method according to the present invention. The amount of the wrapping wire wrapped around the annular core by the method according to the present invention is indicated by the index based on the amount of wrapping wire wrapped around the annular core by the conventional method (which is 100).

## Table 1

| Cord No. | Bead cord construction | Wrapping method of wrapping wire | | Twist angle β (°) of end product | Maximum angle βs (°) between wrapping wire and the plane of annular core | First coil diameter ratio of wrapping wire (Dso/DR) | Second coil diameter ratio of wrapping wire (Dso/Dc) | Evaluated items | | |
|---|---|---|---|---|---|---|---|---|---|---|
| | | Variable distance between reel and wrapping start point (Conventional) | Fixed distance between reel and wrapping start point (Invention) | | | | | Degree of meandering of cord | Formability of cord | Index of the amount of wrapping wire wound on reel |
| 1 | 1×1.5+(6)×1.4 | O | | 3.4 | 50 | 3.40 | 2.06 | × | × | 100 |
| 2 | 1×1.5+(6)×1.4 | | O | 3.4 | 50 | 3.47 | 2.10 | × | × | 190 |
| 3 | 1×1.5+(6)×1.4 | O | | 3.4 | 35 | 2.00 | 1.21 | △ | × | 100 |
| 4 | 1×1.5+(6)×1.4 | | O | 3.4 | 35 | 2.45 | 1.48 | △ | × | 190 |
| 5 | 1×1.5+(6)×1.4 | O | | 3.4 | 30 | 1.74 | 1.05 | △ | △ | 100 |
| 6 | 1×1.5+(6)×1.4 | | O | 3.4 | 30 | 2.04 | 1.23 | △ | △ | 190 |
| 7 | 1×1.5+(6)×1.4 | O | | 3.4 | 28 | 1.89 | 1.14 | O | O | 100 |
| 8 | 1×1.5+(6)×1.4 | | O | 3.4 | 28 | 2.04 | 1.23 | O | O | 190 |
| 9 | 1×1.5+(6)×1.4 | O | | 3.4 | 22 | 0.83 | 0.50 | △ | O | 100 |
| 10 | 1×1.5+(6)×1.4 | | O | 3.4 | 22 | 0.87 | 0.53 | △ | O | 190 |
| 11 | 1×1.5+(6)×1.4 | O | | 3.4 | 22 | 0.98 | 0.59 | O | ◎ | 100 |
| 12 | 1×1.5+(6)×1.4 | | O | 3.4 | 22 | 1.06 | 0.64 | O | O | 190 |
| 13 | 1×1.5+(6)×1.4 | O | | 3.4 | 18 | 1.70 | 1.03 | ◎ | ◎ | 100 |
| 14 | 1×1.5+(6)×1.4 | | O | 3.4 | 18 | 1.81 | 1.10 | ◎ | ◎ | 190 |
| 15 | 1×1.8+(7+13)×1.4 | O | | 5.8 | 35 | 3.31 | 2.04 | × | × | 100 |
| 16 | 1×1.8+(7+13)×1.4 | | O | 5.8 | 35 | 3.34 | 2.06 | × | × | 180 |
| 17 | 1×1.8+(7+13)×1.4 | O | | 5.8 | 30 | 2.10 | 1.29 | △ | △ | 100 |
| 18 | 1×1.8+(7+13)×1.4 | | O | 5.8 | 30 | 2.28 | 1.40 | △ | △ | 180 |
| 19 | 1×1.8+(7+13)×1.4 | O | | 5.8 | 28 | 1.45 | 0.89 | O | O | 100 |
| 20 | 1×1.8+(7+13)×1.4 | | O | 5.8 | 28 | 1.57 | 0.96 | O | O | 180 |
| 21 | 1×1.8+(7+13)×1.4 | O | | 5.8 | 22 | 1.45 | 0.89 | ◎ | O | 100 |
| 22 | 1×1.8+(7+13)×1.4 | | O | 5.8 | 22 | 1.57 | 0.96 | ◎ | O | 180 |
| 23 | 1×1.8+(7+13)×1.4 | O | | 5.8 | 18 | 0.86 | 0.53 | △ | ◎ | 100 |
| 24 | 1×1.8+(7+13)×1.4 | | O | 5.8 | 18 | 0.92 | 0.57 | O | ◎ | 180 |
| 25 | 1×1.8+(7+13)×1.4 | O | | 5.8 | 18 | 1.38 | 0.85 | ◎ | ◎ | 100 |
| 26 | 1×1.8+(7+13)×1.4 | | O | 5.8 | 18 | 1.50 | 0.92 | ◎ | ◎ | 180 |

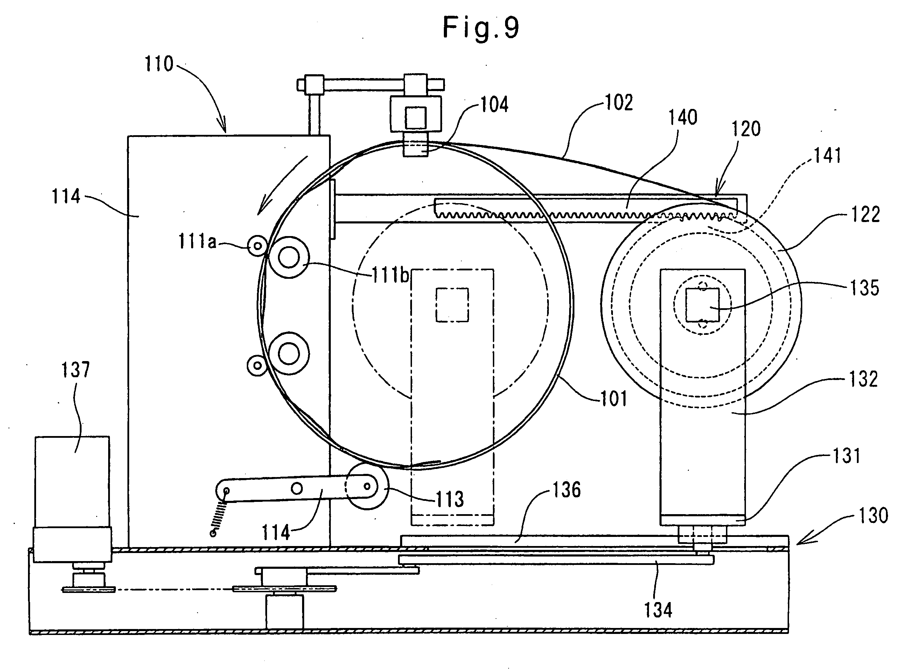

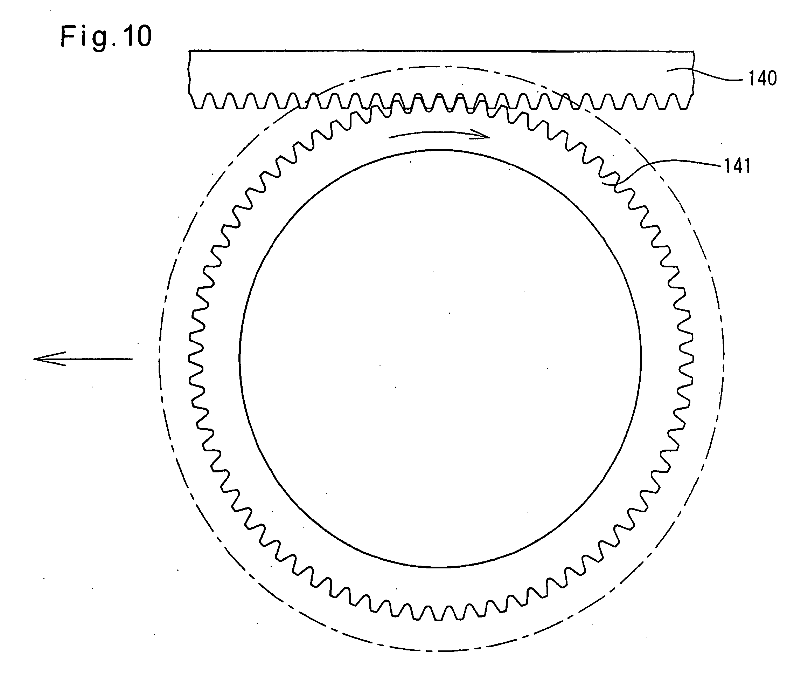

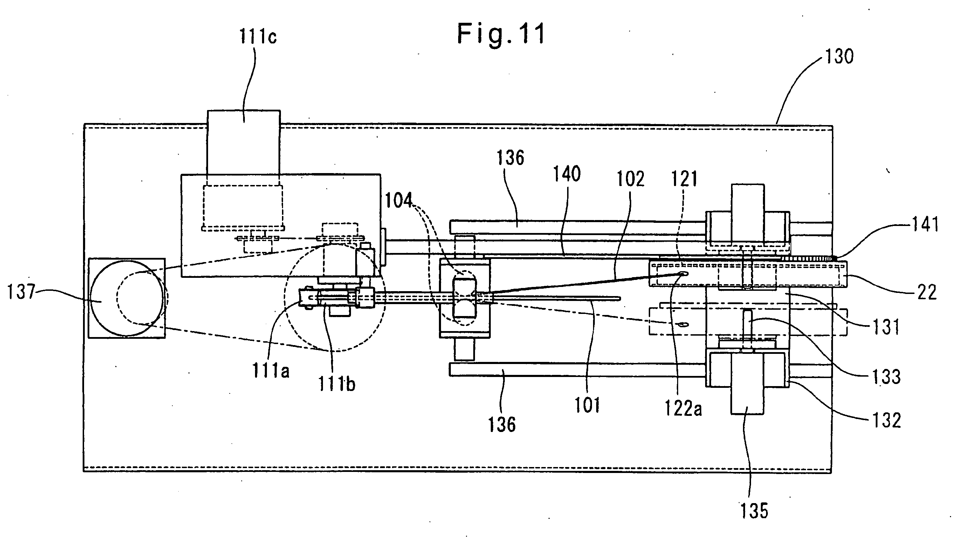

Now referring to Figs. 9 to 16, a cord forming apparatus according to the present invention is described. The cord forming apparatus shown can form a concentric-lay bead cord according to the present invention by moving the reel in a box-like pattern.

The cord forming apparatus shown comprises a driving unit 110 including two pinch rollers 111a and 111b coupled to a driving motor for circumferentially rotating an annular core 101, a wrapping wire supply unit 120 for supplying a wrapping wire 102 wound on a reel 121 to the wrapping start point of the annular core 101, and a slide unit 130 for moving the reel 121 from outside to inside of the annular core 101 parallel to the plane of the annular core 101, moving the reel 121 across and perpendicular to the plane of the annular core to the other side of the plane of the annular core for a short distance enough to clear the plane of the annular core (thereby wrapping the wrapping wire by a half turn around the annular core), moving the reel 121 from inside to outside of the annular core parallel to the plane of the annular core, and moving the reel 121 across and perpendicular to the plane of the annular core to its original position.

The slide unit 130 includes a slide table 131 reciprocated along rails 136 extending parallel to the plane of the annular core by a driving motor 137 through a crank mechanism 134, and a pair of opposed cassette stands 132 mounted on the slide table 131 at such a position that the annular core is partially inserted between the cassette stands when the stands 132 move toward the annular core.

The wrapping wire supply unit 120 is provided at tops of the pair of cassette stands 132. The supply unit 120 comprises the reel 121, on which the wrapping wire 102 is wound, and a cassette 122 including a cylindrical outer wall having a diameter slightly greater than the outer diameter of the reel 121 and having a width at least equal to the inner width of the reel 121. The reel 121 is rotatably mounted in the cassette 122 so as to cover the entire surface of the wrapping wire 102 wound thereon. The reel 121 and the cassette 123 form a cartridge. The cylindrical outer wall of the cassette 122 is formed with a hole 122a through which the wrapping wire 102 is pulled out of the cassette and fed to the wrapping start point of the wrapping wire 102 around the annular core 101. The wrapping wire 102 is wound on the reel 121 to a predetermined coil diameter and set in the cassette 122 of the supply unit 120.

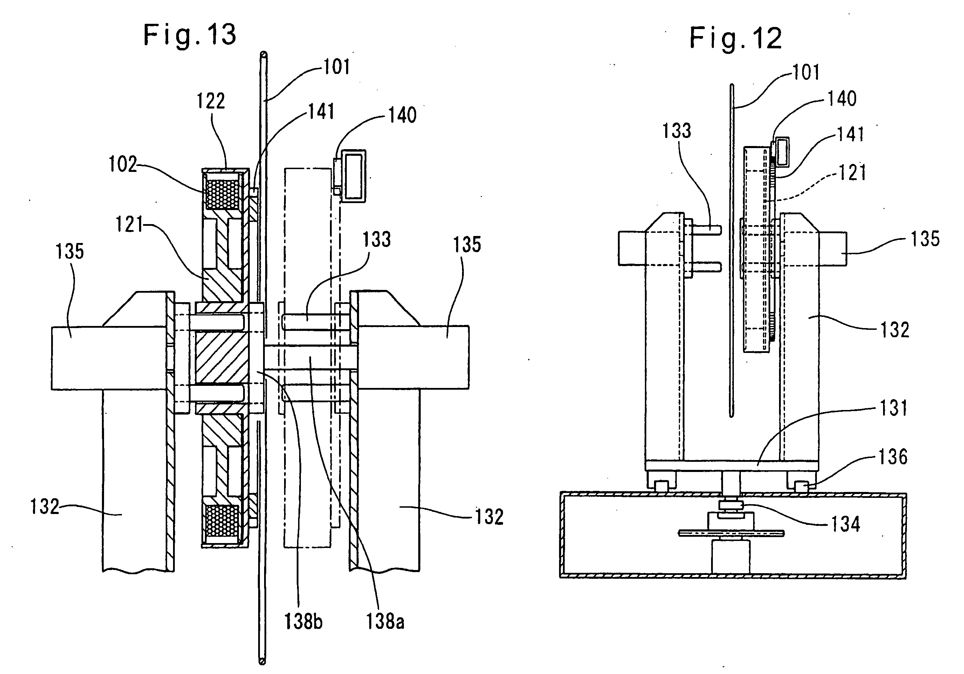

At the top ends of the pair of cassette stands 132, guide rods 133 are provided so as to oppose each other. The cassette 122 can be fitted on the guide rods 133 on either of the cassette stands 132, and can be transferred to the guide rods 133 on the other of the cassette stands 132 by means of the transfer mechanism. As shown in Figs. 12 and 13, the transfer mechanism comprises rods 138a adapted to be extended and retracted by air cylinders 135, and push plates 138b mounted on the free ends of the respective rods 138a for pushing the center of the cassette 122. By pushing the center of the cassette 122 with either of the push plates 138b, the cassette 122 can be transferred between the guide rods 133 on one and the other sides.

The driving unit includes the pinch rollers 111a and 111b for rotating the annular core 101, and a clamp unit 104 located above the pinch rollers 111a and 111b and surrounding the annular core 101 at the wrapping start point, thereby positioning the wrapping start point. In the embodiment, to prevent lateral run-out of the annular core 101, the annular core 101 is positioned upright when rotated.

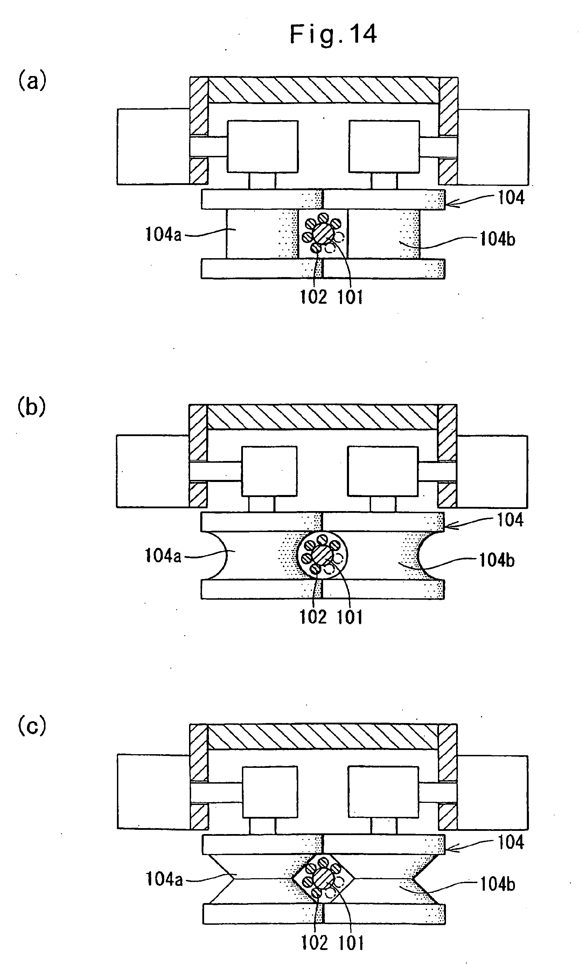

The clamp unit 104, which comprises two rollers 104a and 104b, is only required to prevent lateral run-out of the annular core 101, to maintain stable circumferential rotation of the core 101, while loosely guiding, even when the cord diameter has increased to the final diameter, and to fix the wrapping start point of the wrapping wire 102. Thus the sectional shape of the groove of each roller 104a, 104b is not particularly limited. For example, the grooves of the rollers 104a and 104b may have a U-shaped cross-section as shown in Fig. 14(a), an arcuate cross-section as shown in Fig. 14(b), or a V-shaped cross-section as shown in Fig. 14(c).

A rack 140 is fixed to a stand 114 at such a position that when the reel 121 moves toward and away from the wrapping start point, its upper portion moves along the rack 140. A pinion 141 is mounted on the back of the cassette 122, in which the reel 121 is mounted, so as to mesh with the rack 140. The gear ratio between the rack 140 and the pinion 141 is determined such that when the reel 121 moves toward the wrapping start point, the reel 121 turns in the direction opposite to the direction in which the wrapping wire 102 is unwound to such an extent as to keep the wrapping wire 102 from loosening. With this arrangement, since the wrapping wire 102 does not loosen when the reel 121 moves toward the annular core 101, not only do the degree of meandering and formability of the wrapping wire 102 improve, it is also possible to considerably increase the amount of wrapping wire 102 that can be wound on the reel 121, thereby reducing the downtime of the apparatus.

In this arrangement, in which the reel 121 is moved in a box-like pattern, when the reel 121 is moved toward the wrapping start point of the wrapping wire, the reel 121 is turned in reverse to prevent loosening of the wrapping wire 102. This eliminates the need to produce strong spring-back in the reel 121 by winding the wrapping wire 102 on the reel 121 to a coil diameter smaller than the outer diameter of the reel 121 beforehand. That is, even if the initial coil diameter of the wrapping wire 102 wound on the reel is large, the wrapping wire 102 will never tangle in the reel 121, so that it is possible to increase the upper limit of the coil diameter of the wrapping wire wound on the reel, thereby improving the resistance to in-plane deformation of the bead cord.

Preferably, for high reliability, before starting wrapping, the leading end of the wrapping wire 102 is temporarily secured manually to the annular core 101 using e.g. unvulcanized rubber sheet or adhesive tape. Since an unvulcanized rubber sheet is of the same material as the material forming the tire, it is not necessary to remove such a rubber sheet later. With the leading end of the wrapping wire 102 temporarily secured to the annular core 101, the annular core 101 is rotated in the circumferential direction. At the same time, to wrap the wrapping wire 102 in the shape of the letter S, from the state in which the reel 121 of the wrapping wire 102 is on the right-hand side of the plane of the annular core 101, and the reel 121 is outside of the circle defined by the annular core 101, the reel 21 is moved toward the annular core 101 in parallel to the plane of the annular core while kept out of contact with the annular core until the reel 121 is completely inside of the circle defined by the annular core. In this state, the air cylinder 135 mounted on the upper part of the cassette stand 132 on the right-hand side is activated to move the reel 121 perpendicular to the plane of the annular core 101 to transfer the cassette 122 to the guide rods 133 of the other cassette stand 132. The wrapping wire 102 is thus wrapped around the annular core 101 by a half turn. Then, from this state, the reel 121 is moved parallel to the plane of the annular core from inside to outside of the annular core on the left-hand side of the plane of the annular core. With the reel 21 now outside of the circle defined by the core 1, the cassette 122 and thus the reel 121 are moved perpendicular to the plane of the annular core to their original positions by activating the air cylinder 135 on the left-hand cassette stand. The wrapping wire 102 is thus wrapped around the annular core by one full turn. The reel 121 is moved parallel to the plane of the annular core by the slide unit 130, which is provided at a lower portion of the apparatus.

The reel 121 is thus moved in an elongated box-like pattern. This rather irregular movement of the reel 121 is continuously performed by synchronously activating the driving motor 137 and the air cylinders 135. When the reel 121 is moved toward the annular core 101, the reel 121 is turned in the direction opposite to the direction in which the wrapping wire is unwound to such an extent that the wrapping wire will not loosen.

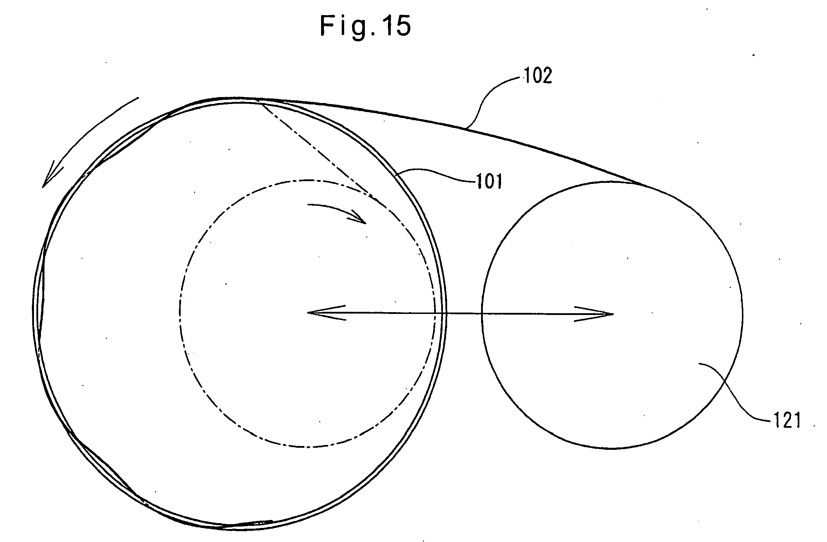

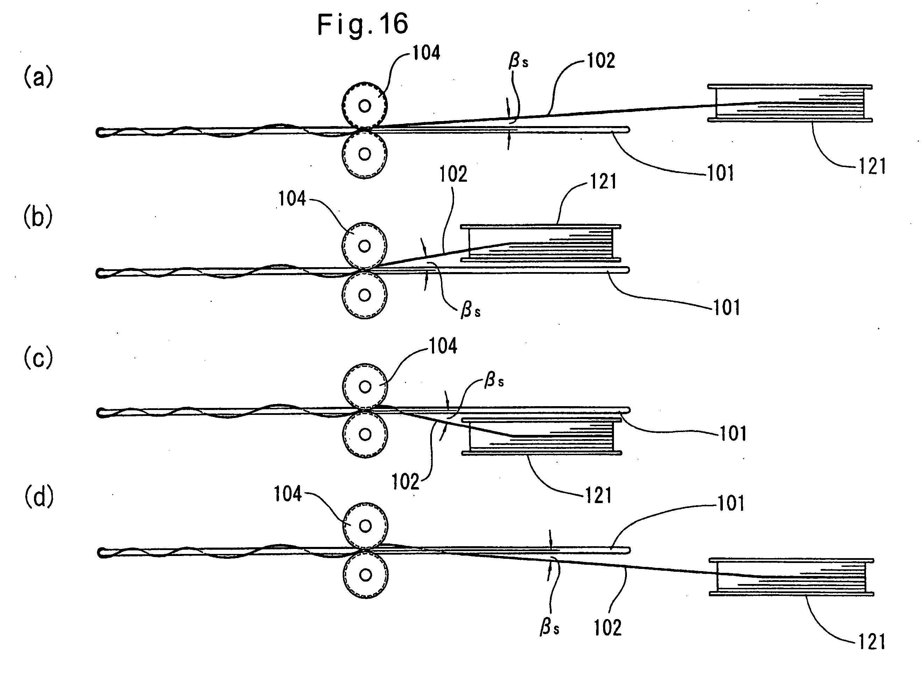

The reel 121, on which the wrapping wire 102 is wound, is reciprocated by the slide unit 130 as shown in Fig. 15. Figs. 16(a) to 16(d) show how the reel 121 moves. In particular, from the position of Fig. 16(a), in which the reel 121 is outside of the circle defined by the annular core 101, the reel 121 is moved toward the annular core until the reel 121 is completely inside of the circle defined by the annular core 101 as shown in Fig. 16(b). Then, from the position of Fig. 16(b), the reel 121 is moved across the plane of the annular core 101 to the other side of the plane as shown in Fig. 16(c). With the reel 121 on the other side of the plane as shown in Fig. 16(c), the reel 121 is moved out of the circle defined by the annular core 101 as shown in Fig. 16(d). The reel 121 is then moved across the plane of the annular core 1 back to its original position (position of Fig. 16 (a)). This cycle is repeated. Thus, according to the present invention, by moving the reel 121 as shown in Figs. 16(a)→(b)→(c)→(d)→(a), the wrapping wire 102 can be helically wrapped around the annular core 101. More specifically, from the position of Fig. 16(a) to the position of Fig. 16(b), and from the position of Fig. 16(c) to the position of Fig. 16(d), the reel 121 moves parallel to the plane of the annular core 101, while the reel 121 moves perpendicular to the plane of the core form the position of Fig. 16(b) to the position of Fig. 16(c), and from the position of Fig. 16(d) to the position of Fig. 16(a).

In this embodiment, the wrapping wire 2 is wrapped around the annular core 1 in one layer in the S direction by moving the reel in a box-like pattern. But it can also be wrapped around the core in two or three layers. In order to wrap the wrapping wire 102 around the annular core 101 in two layers in the Z direction, it is only necessary to move the reel in a box-like pattern in the reverse direction, i.e. in the order of Figs. 16(d)→(c) →(b)→(a)→(d), adjust the vertical position of the clamp unit 104, and change the rollers with U-shaped grooves to new ones. The wrapping wire 102 can also be wrapped around the core 101 in three or four layers in the same manner when it is wrapped around the core in one or two layers.

Using two different kinds of cord forming apparatus in which the reel is moved in a box-like pattern, bead cord specimens were prepared by wrapping the wrapping wire around the annular core in one or two layers under different conditions. For each group of specimens, the degree of meandering and formability were determined. It was discovered that the angle $\beta_S$ between the wrapping wire and the plane of the annular core has the greatest influence on both of the above properties, and that the tension of the wrapping wire and the initial coil diameter of the wrapping wire have the second greatest influence on both of the abovementioned properties. The results of measurement of these properties are shown in Table 2. The first apparatus had the function of rotating the reel 121 in the direction opposite to the direction in which the wrapping wire 102 is unwound when the reel 121 is moved toward the wrapping start point of the wrapping wire 102 around the annular core 101 by engagement of the rack 140 and the pinion 141 to such an extent that the wrapping wire 102 will not loosen. The second apparatus had no such function. The amount of the wrapping wire 102 that can be wound on the reel 121 in the first apparatus is indicated by the index based on the amount of the wrapping wire (100) that can be wound on the reel in the second apparatus.

The degree of meandering and formability shown in Table 2 were determined in the same manner as those in Table 1.

Table 2

| Cord No. | Bead cord construction | Mechanism with rack and pinion for preventing loosening of wrapping wire | | Twist angle $\beta$ (°) of end product | Maximum angle $\beta_s$ (°) between wrapping wire and the plane of annular core | First coil diameter ratio of wrapping wire ($D_{SO}/D_R$) | Second coil diameter ratio of wrapping wire ($D_{SO}/D_C$) | Evaluated items | | |
| | | No | Yes | | | | | Degree of meandering of cord | Formability of cord | Index of the amount of wrapping wire wound on reel |
|---|---|---|---|---|---|---|---|---|---|---|
| 27 | $1 \times 1.5 + (6) \times 1.4$ | O | | 3.4 | 50 | 3.40 | 2.06 | × | × | 100 |
| 28 | $1 \times 1.5 + (6) \times 1.4$ | | O | 3.4 | 50 | 3.47 | 2.10 | × | × | 160 |
| 29 | $1 \times 1.5 + (6) \times 1.4$ | O | | 3.4 | 35 | 2.00 | 1.21 | △ | × | 100 |
| 30 | $1 \times 1.5 + (6) \times 1.4$ | | O | 3.4 | 35 | 2.45 | 1.48 | △ | × | 160 |
| 31 | $1 \times 1.5 + (6) \times 1.4$ | O | | 3.4 | 30 | 1.74 | 1.05 | △ | △ | 100 |
| 32 | $1 \times 1.5 + (6) \times 1.4$ | | O | 3.4 | 30 | 2.04 | 1.23 | △ | △ | 160 |
| 33 | $1 \times 1.5 + (6) \times 1.4$ | O | | 3.4 | 28 | 1.89 | 1.14 | O | O | 100 |
| 34 | $1 \times 1.5 + (6) \times 1.4$ | | O | 3.4 | 28 | 2.04 | 1.23 | O | O | 160 |
| 35 | $1 \times 1.5 + (6) \times 1.4$ | O | | 3.4 | 22 | 0.83 | 0.50 | △ | O | 100 |
| 36 | $1 \times 1.5 + (6) \times 1.4$ | | O | 3.4 | 22 | 0.87 | 0.53 | △ | O | 160 |
| 37 | $1 \times 1.5 + (6) \times 1.4$ | O | | 3.4 | 22 | 1.02 | 0.62 | O | O | 100 |
| 38 | $1 \times 1.5 + (6) \times 1.4$ | | O | 3.4 | 22 | 1.02 | 0.62 | O | ◎ | 160 |
| 39 | $1 \times 1.5 + (6) \times 1.4$ | O | | 3.4 | 22 | 1.13 | 0.69 | O | O | 100 |
| 40 | $1 \times 1.5 + (6) \times 1.4$ | | O | 3.4 | 22 | 1.13 | 0.69 | O | ◎ | 160 |
| 41 | $1 \times 1.5 + (6) \times 1.4$ | O | | 3.4 | 18 | 1.21 | 0.73 | ◎ | O | 100 |
| 42 | $1 \times 1.5 + (6) \times 1.4$ | | O | 3.4 | 18 | 1.21 | 0.73 | ◎ | ◎ | 160 |
| 43 | $1 \times 1.5 + (6) \times 1.4$ | O | | 3.4 | 18 | 1.58 | 0.96 | ◎ | O | 100 |
| 44 | $1 \times 1.5 + (6) \times 1.4$ | | O | 3.4 | 18 | 1.58 | 0.96 | ◎ | ◎ | 160 |
| 45 | $1 \times 1.8 + (7 + 13) \times 1.4$ | O | | 5.8 | 35 | 3.31 | 2.04 | × | × | 100 |
| 46 | $1 \times 1.8 + (7 + 13) \times 1.4$ | | O | 5.8 | 35 | 3.34 | 2.06 | × | × | 150 |
| 47 | $1 \times 1.8 + (7 + 13) \times 1.4$ | O | | 5.8 | 30 | 2.10 | 1.29 | △ | △ | 100 |
| 48 | $1 \times 1.8 + (7 + 13) \times 1.4$ | | O | 5.8 | 30 | 2.28 | 1.40 | △ | △ | 150 |
| 49 | $1 \times 1.8 + (7 + 13) \times 1.4$ | O | | 5.8 | 28 | 1.45 | 0.89 | O | O | 100 |
| 50 | $1 \times 1.8 + (7 + 13) \times 1.4$ | | O | 5.8 | 28 | 1.57 | 0.96 | O | O | 150 |
| 51 | $1 \times 1.8 + (7 + 13) \times 1.4$ | O | | 5.8 | 22 | 1.45 | 0.89 | ◎ | O | 100 |
| 52 | $1 \times 1.8 + (7 + 13) \times 1.4$ | | O | 5.8 | 22 | 1.57 | 0.96 | ◎ | ◎ | 150 |
| 53 | $1 \times 1.8 + (7 + 13) \times 1.4$ | O | | 5.8 | 18 | 0.86 | 0.53 | △ | O | 100 |
| 54 | $1 \times 1.8 + (7 + 13) \times 1.4$ | | O | 5.8 | 18 | 0.86 | 0.53 | △ | ◎ | 150 |
| 55 | $1 \times 1.8 + (7 + 13) \times 1.4$ | O | | 5.8 | 18 | 1.03 | 0.64 | O | O | 100 |
| 56 | $1 \times 1.8 + (7 + 13) \times 1.4$ | | O | 5.8 | 18 | 1.03 | 0.64 | O | ◎ | 150 |
| 57 | $1 \times 1.8 + (7 + 13) \times 1.4$ | O | | 5.8 | 18 | 1.21 | 0.74 | ◎ | O | 100 |
| 58 | $1 \times 1.8 + (7 + 13) \times 1.4$ | | O | 5.8 | 18 | 1.21 | 0.74 | ◎ | ◎ | 150 |
| 59 | $1 \times 1.8 + (7 + 13) \times 1.4$ | | O | 5.8 | 18 | 1.45 | 0.89 | ◎ | ◎ | 150 |

**Claims**

1. A method of forming an annular concentric-lay bead cord,
   wherein, with an annular core (1) circumferentially rotated, a reel (21) on which is wound a wrapping wire (2) is repeatedly reciprocated across the plane of said annular core while said reel is inside and outside of a circle defined by said annular core (1) so that the angle $\beta_S$ formed between the wrapping wire and the plane of said annular core (1) will not exceed 29 degrees, thereby unwinding said wrapping wire from said reel (21) and continuously and helically wrapping the thus unwound wrapping wire around said annular core to form a sheath layer or layers,
   **characterized in that** said reel (21) is moved toward a wrapping start point (13) at which the wrapping wire begins to be wrapped around the annular core parallel to the plane of said annular core (1), moved perpendicular to said plane, moved away from said wrapping start point parallel to said plane, and moved perpendicular to said plane, and wherein while said reel (21) is moving toward said wrapping start point, said reel is rotated in a direction opposite to a direction in which said wrapping wire is unwound from said reel as said reel approaches said annular core (1).

2. A method of forming an annular concentric-lay bead cord,
   wherein, with an annular core (101) circumferentially rotated, a reel (121) on which is wound a wrapping wire (102) is repeatedly reciprocated across the plane of said annular core (101) while said reel (121) is inside and outside of a circle defined by said annular core (101) so that the angle $\beta_S$ formed between the wrapping wire and the plane of said annular core (101) will not exceed 29 degrees, thereby unwinding said wrapping wire from said reel (121) and continuously and helically wrapping the thus unwound wrapping wire around said annular core (101) to form a sheath layer or layers,
   **characterized in that** said annular core (101) is repeatedly swung about a wrapping start point (104) at which the wrapping wire begins to be wrapped around the annular core (101), between from a first position outside of a circle defined by the annular core and on one side of the plane of the annular core to a second position inside of said circle, moving said reel (121) across the plane of the annular core (101) to a third position on the other side of the plane of the annular core, moving said reel to a fourth position outside of the circle defined by the annular core (101), and moving said reel (121) across the plane of the annular core (101) to the first position,
   and wherein said reel (121) is reciprocated across the plane of said annular core (101) while said reel is inside and outside of the circle defined by said annular core (101), thereby unwinding said wrapping wire from said reel (121) and helically wrapping the thus unwound wrapping wire around said annular core (101).

3. The method of forming an annular concentric-lay bead cord of any of claim 1 or 2 wherein a leading end of said wrapping wire, which is unwound from said reel (121), is temporarily fastened to said annular core (101) before said wrapping wire is helically wrapped around said annular core by means of an unvulcanized or semi-vulcanized rubber sheet.

4. The method of forming an annular concentric-lay bead cord of any of claims 1, 2 and 3 wherein the coil diameter of the wrapping wire wound on said reel (121) is adjusted to satisfy the following formula:

$$0.90D_R \leqq D_{SO} \leqq 3.3D_R$$

or

$$0.55D_C \leqq D_{SO} \leqq 2.0D_C$$

where $D_R$ is the outer diameter of the reel, $D_{SO}$ is the initial coil diameter of the wrapping wire wound on the reel, and Dc is the diameter of the circle defined by the annular core (101).

5. An apparatus for forming an annular concentric-lay bead cord, comprising:

   a driving unit (10) for circumferentially rotating an annular core (1),
   a stationary supply unit (20) for supplying a wrapping wire (2) wound on a reel (21) to a wrapping station for wrapping the wrapping wire around the annular core,
   a swing unit (11) for swinging the annular core about a wrapping start point (13) of said wrapping station along the plane of the annular core, and

reel transfer mechanisms (26, 27) opposed to each other on both sides of the plane of the annular core, while kept spaced apart from said annular core,

said supply unit including said reel (21), said swing unit swinging the annular core about said wrapping start point between a first position where said reel is inside of a circle defined by said annular core (1) and a second position where said reel is outside of said circle.

6. An apparatus for forming an annular concentric-lay bead cord, comprising:

a driving unit (110) for circumferentially rotating an annular core (101),

a supply unit (120) for supplying a wrapping wire (102) wound on a reel (121) to a wrapping station for wrapping the wrapping wire around the annular core, said supply unit including said reel, a slide unit (130) for moving said reel, parallel to the plane of the annular core, from a first position outside of a circle defined by the annular core (101) and on one side of the plane of the annular core (101) to a second position inside of said circle, moving said reel (121) across and perpendicular to the plane of the annular core (101) to a third position on the other side of the plane of the annular core (101), moving said reel (121) parallel to the plane of the annular core (101) to a fourth position outside of the circle defined by the annular core (101), and moving said reel (121) across and perpendicular to the plane of the annular core to the first position, and

a mechanism for preventing loosening of the wrapping wire, said mechanism comprising a rack (140) provided at such a position that an upper portion of said reel moves along said rack when said reel moves toward a wrapping start point of the annular core, and a pinion (141) provided on the back of said reel so as to mesh with said reel (121), thereby rotating said reel (121) in a direction opposite to a direction in which the wrapping wire is unwound from said reel as the reel approaches the annular core (101).

7. The apparatus for forming an annular concentric-lay bead cord of claim 5 or 6 wherein said driving unit (10, 110) comprises two pinch rollers (12a, 12b, 111a, 111b) for rotating the annular core, and a clamp unit (13, 104) provided nearer to said supply unit than is said pinch rollers for loosely guiding the annular core, said clamp unit serving as said winding start point, where said wrapping wire begins to be wrapped around the annular core.

8. The apparatus for forming an annular concentric-lay bead cord of claim 5 to 7 wherein there are provided two reel transfer mechanisms (26, 27, 138a, 138b) opposed to each other and spaced apart from each other by a minimum distance above which the reel can be moved from one side of the plane of the annular core to the other side of the plane of the annular core when the reel is transferred from one to the other of said reel transfer mechanisms.

9. The apparatus for forming an annular concentric-lay bead cord of any of claims 5 to 8 wherein said supply unit (20, 120) further comprises a cassette (23, 122) in which is mounted said reel, said cassette including a cylindrical outer wall having a diameter slightly greater than the outer diameter of said reel and a width corresponding to the inner width of said reel, and formed with a hole (23a, 122a) through which the wrapping wire is pulled out of said cassette.

**Patentansprüche**

1. Verfahren zum Ausbilden einer ringförmigen konzentrischen Wulstschnurlage, bei dem, wobei ein ringförmiger Kern (1) umlaufend gedreht wird, ein Spulenkörper (21), auf dem ein Wicklungsdraht (2) gewickelt ist, wiederholend über die Ebene des ringförmigen Kerns hin und her bewegt wird, während sich der Spulenkörper innerhalb und außerhalb eines Kreises befindet, der von dem ringförmigen Kern (1) definiert wird, sodass der Winkel $\beta_s$, der zwischen dem Wicklungsdraht und der Ebene des ringförmigen Kerns (1) ausgebildet ist, 29 Grad nicht übersteigen wird, wodurch der Wicklungsdraht von dem Spulenkörper (21) abgewickelt wird und der somit abgewickelte Wicklungsdraht um den ringförmigen Kern kontinuierlich und spiralförmig gewickelt wird, um eine Mantelschicht oder - schichten auszubilden,

**dadurch gekennzeichnet, dass** der Spulenkörper (21) zu einem Wicklungsstartpunkt (13) bewegt wird, an dem der Wicklungsdraht beginnt, um den ringförmigen Kern parallel zur Ebene des ringförmigen Kerns (1) gewickelt zu werden, senkrecht zur Ebene bewegt wird, von dem Wicklungsstartpunkt parallel zur Eben weg bewegt wird und senkrecht zu der Ebene bewegt wird, und bei dem, während sich der Spulenkörper (21) zum Wicklungsstartpunkt bewegt, der Spulenkörper in eine Richtung entgegengesetzt zu einer Richtung gedreht wird, in welcher der Wicklungsdraht von dem Spulenkörper abgewickelt wird, wenn sich der Spulenkörper dem ringförmigen Kern (1) annähert.

2. Verfahren zum Ausbilden einer ringförmigen konzentrischen Wulstschnurlage, bei dem, wobei ein ringförmiger Kern (101) umlaufend gedreht wird, ein Spulenkörper (121), auf dem ein Wicklungsdraht (102) gewickelt ist, wiederholend über die Ebene des ringförmigen Kerns (101) hin und her bewegt wird, während sich der Spulenkörper (121) in und außerhalb eines Kreises befindet, der von dem ringförmigen Kern (101) definiert wird, sodass der Winkel $\beta_s$, der zwischen dem Wicklungsdraht und der Eben des ringförmigen Kerns (101) ausgebildet ist, 29 Grad nicht übersteigen wird, wodurch der Wicklungsdraht von dem Spulenkörper (121) abgewickelt wird und der somit abgewickelte Wicklungsdraht um den ringförmigen Kern (101) kontinuierlich und spiralförmig gewickelt wird, um eine Mantelschicht oder -schichten auszubilden,

**dadurch gekennzeichnet, dass** der ringförmige Kern (101) wiederholend um einen Wicklungsstartpunkt (104) geschwenkt wird, an dem der Wicklungsdraht beginnt, um den ringförmigen Kern (101) gewickelt zu werden, zwischen von einer ersten Position außerhalb eines Kreises, der von dem ringförmigen Kern definiert wird, und auf einer Seite der Ebene des ringförmigen Kerns zu einer zweiten Position in dem Kreis, wobei der Spulenkörper (121) über die Ebene des ringförmigen Kerns (101) zu einer dritten Position auf der anderen Seite der Ebene des ringförmigen Kerns bewegt wird, der Spulenkörper zu einer vierten Position außerhalb des Kreises, der durch den ringförmigen Kern (101) definiert wird, bewegt wird und der Spulenkörper (121) über die Ebene des ringförmigen Kerns (101) zu der ersten Position bewegt wird, und bei dem der Spulenkörper (121) über die Ebene des ringförmigen Kerns (101) hin und her bewegt wird, während sich der Spulenkörper in und außerhalb des Kreises befindet, der von dem ringförmigen Kern (101) definiert wird, wodurch der Wicklungsdraht von dem Spulenkörper (121) abgewickelt wird, und der somit abgewickelte Wicklungsdraht spiralförmig um den ringförmigen Kern (101) gewickelt wird.

3. Verfahren zum Ausbilden einer ringförmigen konzentrischen Wulstschnurlage nach Anspruch 1 oder 2, bei dem ein führendes Ende des Wicklungsdrahts, der von dem Spulenkörper (121) abgewickelt ist, vorübergehend an dem ringförmigen Kern (101) befestigt wird, bevor der Wicklungsdraht spiralförmig um den ringförmigen Kern gewickelt wird, mittels einer nicht vulkanisierten oder semivulkanisierten Gummilage.

4. Verfahren zum Ausbilden einer ringförmigen konzentrischen Wulstschnurlage nach einem der Ansprüche 1, 2 oder 3, bei dem der Spulendurchmesser des Wicklungsdrahts, der auf den Spulenkörper (121) gewickelt ist, eingestellt ist, um die folgende Formel zu erfüllen:

$$0,90 \ D_R \ \leq \ D_{S0} \ \leq \ 3,3 \ D_R$$

oder

$$0,55 \ D_C \ \leq \ D_{S0} \ \leq \ 2,0 \ D_C$$

wobei $D_R$ ein Außendurchmesser des Spulenkörpers ist, $D_{S0}$ der anfängliche Spulendurchmesser des Wicklungsdrahts ist, der auf den Spulenkörper gewickelt ist, und $D_C$ der Durchmesser der Kreises ist, der durch den ringförmigen Kern (101) definiert wird.

5. Vorrichtung zum Ausbilden einer ringförmigen konzentrischen Wulstschnurlage, die umfasst:

eine Antriebseinheit (10) zum umlaufenden Drehen eines ringförmigen Kerns (1), eine stationäre Zufuhreinheit (20) zum Zuführen eines Wicklungsdrahts (2), der auf einen Spulenkörper (21) gewickelt ist, zu einer Wicklungsstation zum Wickeln des Wicklungsdrahts um den ringförmigen Kern, eine Schwenkeinheit (11) zum Schwenken des ringförmigen Kerns um einen Wicklungsstartpunkt (13) der Wicklungsstation entlang der Ebene des ringförmigen Kerns, und Spulenkörperübertragungsmechanismen (26, 27), die einander auf beiden Seiten der Ebene des ringförmigen Kerns gegenüberliegen, wobei diese von dem ringförmigen Kern beabstandet gehalten werden,

wobei die Zufuhreinheit den Spulenkörper (21) enthält, die Schwenkeinheit den ringförmigen Kern um den Wicklungsstartpunkt zwischen einer ersten Position, an der sich der Spulenkörper in einem Kreis befindet, der von dem ringförmigen Kern (1) definiert wird, und einer zweiten Position, an der sich der Spulenkörper außerhalb des Kreises befindet, schwenkt.

**6.** Vorrichtung zum Ausbilden einer ringförmigen konzentrischen Wulstschnurlage, die umfasst:

eine Antriebseinheit (110) zum umlaufenden Drehen eines ringförmigen Kerns (101),

eine Zufuhreinheit (120) zum Zuführen eines Wicklungsdrahts (102), der auf einen Spulenkörper (121) gewickelt ist, zu einer Wicklungsstation zum Wickeln des Wicklungsdrahts um den ringförmigen Kern, wobei die Zufuhreinheit den Spulenkörper, eine Verschiebungseinheit (130) zum Bewegen des Spulenkörpers parallel zur Ebene des ringförmigen Kerns von einer ersten Position außerhalb eines Kreises, der von dem ringförmigen Kern (101) definiert wird, und auf einer Seite der Ebene des ringförmigen Kerns (101) zu einer zweiten Position in dem Kreis enthält, der Spulenkörper (121) über und senkrecht zur Ebene des ringförmigen Kerns (101) zu einer dritten Position auf der anderen Seite der Ebene des ringförmigen Kerns (101) bewegt wird, der Spulenkörper (121) parallel zu der Ebene des ringförmigen Kerns (101) zu einer vierten Position außerhalb des Kreises, der von dem ringförmigen Kern (101) definiert wird, bewegt wird und der Spulenkörper (121) über und senkrecht zu der Ebene des ringförmigen Kerns zu der ersten Position bewegt wird, und

einen Mechanismus zum Vermeiden des Lockerns des Wicklungsdrahts, wobei der Mechanismus eine Zahnstange (140), die an einer solchen Position vorgesehen ist, dass sich ein oberer Abschnitt des Spulenkörpers entlang der Zahnstange bewegt, wenn sich der Spulenkörper zu einem Wicklungsstartpunkt des ringförmigen Kerns bewegt, und ein Ritzel (141) umfasst, das so auf der Rückseite des Spulenkörpers vorgesehen ist, dass dieses mit der Zahnstange (121) im Zahneingriff steht, wodurch der Spulenkörper (121) in eine Richtung entgegengesetzt zu einer Richtung gedreht wird, in welcher der Wicklungsdraht von dem Spulenkörper abgewickelt wird, wenn sich der Spulenkörper dem ringförmigen Kern (101) annähert.

**7.** Vorrichtung zum Ausbilden einer ringförmigen konzentrischen Wulstschnurlage nach Anspruch 5 oder 6, bei der die Antriebseinheit (10, 110) zwei Andruckrollen (12a, 12b, 111a, 111b) zum Drehen des ringförmigen Kerns und eine Klammereinheit (13, 104) umfasst, die näher an der Zufuhreinheit als die Andruckrollen zum losen Führen des ringförmigen Kerns vorgesehen sind, wobei die Klammereinheit als Wicklungsstartpunkt dient, wo der Wicklungsdraht beginnt, um den ringförmigen Kern gewickelt zu werden.

**8.** Vorrichtung zum Ausbilden einer ringförmigen konzentrischen Wulstschnurlage nach einem der Ansprüche 5 bis 7, bei der zwei Spulenkörperübertragungsvorrichtungen (26, 27, 138a, 138b) vorgesehen sind, die einander gegenüberliegen und voneinander um einen minimalen Abstand beabstandet sind, oberhalb dessen der Spulenkörper von einer Seite der Ebene des ringförmigen Kerns zu der anderen Seite der Ebene des ringförmigen Kerns bewegt werden kann, wenn der Spulenkörper von einem zu dem anderen der Spulenkörperübertragungsmechanismen übertragen wird.

**9.** Vorrichtung zum Ausbilden einer ringförmigen konzentrischen Wulstschnurlage nach einem der Ansprüche 5 bis 8, bei der die Zufuhreinheit (20, 120) ferner eine Kassette (23, 122) umfasst, in welcher der Spulenkörper angebracht ist, wobei die Kassette eine zylindrische Außenwand enthält, die einen Durchmesser, der etwas größer als der Außendurchmesser des Spulenkörpers ist, und eine Breite aufweist, die der Innenbreite des Spulenkörpers entspricht, und die mit einer Öffnung (23a, 122a) ausgebildet ist, durch die der Wicklungsdraht aus der Kassette herausgezogen wird.

**Revendications**

**1.** Procédé pour former un cordon de talon à disposition annulaire concentrique,

dans lequel, avec un noyau annulaire (1) mis en rotation circonférentielle, une bobine (21) sur laquelle est enroulé un fil d'enveloppement (2) est déplacée en va-et-vient de façon répétée à travers le plan dudit noyau annulaire alors que ladite bobine se trouve à l'intérieur et à l'extérieur d'un cercle défini par ledit noyau annulaire (1), de sorte que l'angle $\beta_S$ formé entre le fil d'enveloppement et le plan dudit noyau annulaire (1) ne va pas dépasser 29 degrés, en déroulant ainsi ledit fil d'enveloppement depuis ladite bobine (21) et en enroulant en continu et en hélice le fil d'enveloppement ainsi déroulé autour dudit noyau annulaire pour former une ou plusieurs couches en forme de gaine, **caractérisé en ce que** ladite bobine (21) est déplacée vers un point de départ d'enveloppement (13) auquel le fil d'enveloppement commence à être enroulé autour du noyau annulaire parallèlement au plan dudit noyau annulaire (1), est déplacée perpendiculairement audit plan, est déplacée en éloignement dudit point de départ d'enveloppement parallèlement audit plan, et est déplacée perpendiculairement audit plan, et

dans lequel, alors que ladite bobine (21) se déplace vers ledit point de départ d'enveloppement, ladite bobine est mise en rotation dans une direction opposée à une direction dans laquelle ledit fil d'enveloppement est déroulé depuis ladite bobine alors que ladite bobine s'approche dudit noyau annulaire (1).

2. Procédé pour former un cordon de talon à disposition annulaire concentrique, dans lequel, avec un noyau annulaire (101) mis en rotation circonférentielle, une bobine (121) sur laquelle est enroulé un fil d'enveloppement (102) est déplacée en va-et-vient de façon répétée à travers le plan dudit noyau annulaire (101) alors que ladite bobine (121) se trouve à l'intérieur et à l'extérieur d'un cercle défini par ledit noyau annulaire (101) de sorte que l'angle $\beta_S$ formé entre le fil d'enveloppement et le plan dudit noyau annulaire (101) ne va pas dépasser 29 degrés, en déroulant ainsi ledit fil d'enveloppement depuis ladite bobine (121) et en enroulant en continu et en hélice le fil d'enveloppement ainsi déroulé autour dudit noyau annulaire (101) pour former une ou plusieurs couches formant gaine,

   **caractérisé en ce que** ledit noyau annulaire (101) est mis en oscillation de façon répétée autour d'un point de départ d'enveloppement (104) auquel le fil d'enveloppement commence à être enveloppé autour du noyau annulaire (101) entre une première position à l'extérieur d'un cercle défini par le noyau annulaire et sur un côté du plan du noyau annulaire jusqu'à une seconde position à l'intérieur dudit cercle, en déplaçant ladite bobine (121) à travers le plan du noyau annulaire (101) jusqu'à une troisième position de l'autre côté du plan du noyau annulaire, en déplaçant ladite bobine à une quatrième position à l'extérieur du cercle défini par le noyau annulaire (101), et en déplaçant ladite bobine (121) à travers le plan du noyau annulaire (101) vers la première position, et dans lequel ladite bobine (121) est déplacée en va-et-vient à travers le plan dudit noyau annulaire (101) alors que ladite bobine se trouve à l'intérieur et à l'extérieur du cercle défini par ledit noyau annulaire (101), en déroulant ainsi ledit fil d'enveloppement depuis ladite bobine (121) et en enroulant en hélice le fil d'enveloppement ainsi déroulé autour dudit noyau annulaire (101).

3. Procédé pour former un cordon de talon à disposition annulaire concentrique selon l'une ou l'autre des revendications 1 et 2, dans lequel une extrémité d'amorce dudit fil d'enveloppement, qui est déroulée depuis ladite bobine (121), est temporairement fixée sur ledit noyau annulaire (101) avant d'enrouler ledit fil d'enveloppement en hélice autour dudit noyau annulaire au moyen d'une feuille en caoutchouc non vulcanisée ou semi-vulcanisée.

4. Procédé pour former un cordon de talon à disposition annulaire concentrique selon l'une quelconque des revendications 1, 2 et 3, dans lequel le diamètre de bobinage du fil d'enveloppement enroulé sur ladite bobine (121) est ajusté pour satisfaire la formule suivante :

$$0{,}90\,D_R \leq D_{SO} \leq 3{,}3\,D_R$$

ou

$$0{,}55\,D_C \leq D_{SO} \leq 2{,}0\,D_C$$

dans laquelle $D_R$ est le diamètre extérieur de la bobine, $D_{SO}$ est le diamètre de bobinage initial du fil d'enveloppement enroulé sur la bobine, et $D_C$ est le diamètre du cercle défini par le noyau annulaire (101).

5. Appareil pour former un cordon de talon à disposition annulaire concentrique, comprenant :

   une unité d'entraînement (10) pour mettre en rotation circonférentielle un noyau annulaire (1),
   une unité d'alimentation stationnaire (20) pour fournir un fil d'enveloppement (2) enroulé sur une bobine (21) à une station d'enveloppement pour envelopper le fil d'enveloppement autour du noyau annulaire,
   une unité d'oscillation (11) pour faire osciller le noyau annulaire autour d'un point de départ d'enveloppement (13) de ladite station d'enveloppement le long du plan du noyau annulaire, et
   des mécanismes de transfert de bobine (26, 27) opposés l'un à l'autre sur les deux côtés du plan du noyau annulaire tout en étant maintenus écartés vis-à-vis dudit noyau annulaire,
   ladite unité d'alimentation incluant ladite bobine (21), ladite unité d'oscillation qui fait osciller le noyau annulaire autour dudit point de départ d'enveloppement entre une première position à laquelle ladite bobine est à l'intérieur d'un cercle défini par ledit noyau annulaire (1) et
   une seconde position à laquelle ladite bobine est à l'extérieur dudit cercle.

6. Appareil pour former un cordon de talon à disposition annulaire concentrique, comprenant :

une unité d'entraînement (110) pour mettre en rotation circonférentielle un noyau annulaire (101),

une unité d'alimentation (120) pour fournir un fil d'enveloppement (102) enroulé sur une bobine (121) à une station d'enveloppement pour envelopper le fil d'enveloppement autour du noyau annulaire, ladite unité d'alimentation incluant ladite bobine, une unité à coulissement (130) pour déplacer ladite bobine parallèlement au plan du noyau annulaire, depuis une première position à l'extérieur d'un cercle défini par le noyau annulaire (101) et sur un côté du plan du noyau annulaire (101) jusqu'à une seconde position à l'intérieur dudit cercle, pour déplacer ladite bobine (121) à travers et perpendiculairement au plan du noyau annulaire (101) jusqu'à une troisième position de l'autre côté du plan du noyau annulaire (101), pour déplacer ladite bobine (121) parallèlement au plan du noyau annulaire (101) jusqu'à une quatrième position à l'extérieur du cercle défini par le noyau annulaire (101), et

pour déplacer ladite bobine (121) à travers et perpendiculairement au plan du noyau annulaire jusqu'à la première position, et

un mécanisme pour empêcher un relâchement du fil d'enveloppement, ledit mécanisme comprenant une crémaillère (140) prévue à une position telle qu'une portion supérieure de ladite bobine se déplace le long de ladite crémaillère quand ladite bobine se déplace vers un point de départ d'enveloppement du noyau annulaire, et un pignon (141) prévu sur l'arrière de ladite bobine de manière à venir engrener avec ladite bobine (121), en faisant ainsi tourner ladite bobine (121) dans une direction opposée à une direction dans laquelle le fil d'enveloppement est déroulé depuis ladite bobine alors que la bobine s'approche du noyau annulaire (101).

7. Appareil pour former un cordon de talon à disposition annulaire concentrique selon la revendication 5 ou 6, dans lequel ladite unité d'entraînement (10, 110) comprend deux rouleaux pinceurs (12a, 12b, 111a, 111b) pour faire tourner le noyau annulaire, et une unité de serrage (13, 104) prévue plus proche de ladite unité d'alimentation que ne le sont lesdits rouleaux pinceurs pour guider de manière lâche le noyau annulaire, ladite unité de serrage servant de point de départ d'enveloppement, là où ledit fil d'enveloppement commence à être enveloppé autour du noyau annulaire.

8. Appareil pour former un cordon de talon à disposition annulaire concentrique selon les revendications 5 à 7, dans lequel sont prévus deux mécanismes de transfert de bobine (26, 27, 138a, 138b) opposés l'un à l'autre et espacés l'un de l'autre d'une distance minimum, au-dessus desquels la bobine peut être déplacée depuis un côté du plan du noyau annulaire jusqu'à l'autre côté du plan du noyau annulaire quand la bobine est transférée de l'un à l'autre desdits mécanismes de transfert de bobine.

9. Appareil pour former un cordon de talon à disposition annulaire concentrique selon l'une quelconque des revendications 5 à 8, dans lequel ladite unité d'alimentation (20, 120) comprend encore une cassette (23, 122) dans laquelle est montée ladite bobine, ladite cassette incluant une paroi extérieure cylindrique ayant un diamètre légèrement plus grand que le diamètre extérieur de ladite bobine et une largeur correspondant à la largeur intérieure de ladite bobine, et formée avec un trou (23a, 122a) à travers lequel le fil d'enveloppement est tiré hors de ladite cassette.

# Fig.1

# Fig.2

EP 1 798 023 B1

Fig.3

# Fig.4

EP 1 798 023 B1

Fig.6

Fig.5

EP 1 798 023 B1

# Fig.7

(a)

13a

13b

13

11

2  1

(b)

13a

13b

13

11

2  1

(c)

13a

13b

13

11

2  1

Fig.8

Fig.9

Fig.10

140

141

EP 1 798 023 B1

Fig.11

EP 1 798 023 B1

# Fig.13

# Fig.12

EP 1 798 023 B1

# Fig.14

(a)

104

104a

104b

102 101

(b)

104

104a

104b

102 101

(c)

104

104a

104b

102 101

Fig. 15

# Fig.16

(a)

(b)

(c)

(d)

121 101 102 104 $\beta_s$

# Fig.17

## (a)

## (b)

Fig.18

Fig.19
(a)

(b)

Fig.20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3499261 B
- JP 2001047169 A
- JP 2004098640 A
- WO 2004018187 A1